# EUROPEAN PATENT SPECIFICATION

(11) **EP 4 246 201 B1**
(45) Date of publication and mention of the grant of the patent: **26.08.2026**
(21) Application number: 21890799.6
(22) Date of filing: 14.09.2021
(51) Int. Cl.: G02B 13/00, G03B 37/00, B07C 5/02, B07C 5/342, B07C 5/36, G02B 15/02, G02B 13/24, G02B 9/64

(54) **LENS ASSEMBLY, IMAGING DEVICE, DETECTION DEVICE, AND DETECTION SYSTEM**
LINSENANORDNUNG, BILDGEBUNGSVORRICHTUNG, DETEKTIONSVORRICHTUNG UND DETEKTIONSSYSTEM
ENSEMBLE LENTILLE, DISPOSITIF D'IMAGERIE, DISPOSITIF DE DÉTECTION ET SYSTÈME DE DÉTECTION

(30) Priority: 16.11.2020 CN 202011275485
(43) Date of publication of application: 20.09.2023
(73) Proprietor: BEIJING LEADERTECH INTELLIGENT EQUIPMENT CORPORATION, Beijing 100000 (CN)
(72) Inventor: CUI, Kaixiang, Beijing 100000 (CN)
(74) Representative: Bayramoglu et al.
(86) International application number: PCT/CN2021/118312
(87) International publication number: WO 2022/100271

(56) References cited:
- WO-A1-2014/073685
- CN-A- 105 182 504
- CN-A- 107 065 119
- CN-A- 108 318 994
- CN-A- 109 143 532
- CN-A- 109 991 724
- CN-A- 112 099 204
- CN-U- 202 281 857
- CN-U- 210 666 175
- JP-A- S57 104 107

## Description

### Technical Field

The present application relates to the field of optical imaging, and particularly to a lens assembly, an imaging device, a detection device and a detection system.

### Background Art

During detection of an appearance defect of a workpiece, an image of a side circumference of the workpiece is required to be acquired. In a prior art, in order to acquire a complete image of the side circumference of the workpiece, plural cameras are generally adopted to shoot from different angles respectively, or a single camera is used to shoot plural times from different angles, and then, plural acquired images are fused. However, in such a manner, an image acquisition process is complicated and time-consuming, and quality of the final image is affected by many factors (for example, imaging quality of the camera, an image fusion level, or the like), and therefore, detection of the workpiece is not facilitated.

In addition, imaging of a side circumference of a piece with a metal surface always has a problem that stains of non-metal components on the surface often cannot be imaged or a formed image has a poor contrast and cannot be used as an image basis for further piece sorting.

Document D1 CN107065119A discloses a pinhole camera with the lens length being discretely adjustable, which comprises a preposed pinhole lens and a camera, and is characterized in that the pinhole camera further comprises a plurality of relay lenses between the preposed pinhole lens and the camera; and each relay lens can be detachably connected with the preposed pinhole lens and the camera, and any two relay lenses can be detachably connected therebetween. In addition, the preposed pinhole lens can be detachably connected to the camera. The preposed pinhole lens is a telecentric optical path in an image space, the relay lenses are dual telecentric optical paths, and the magnifying power of the relay lenses is 1:1. The pinhole camera can select to use or not to use the relay lenses and select the number of the used relay lenses according to actual requirements or different application scenarios, thereby realizing discrete adjustment for the length without changing geometric parameters of an optical system, increasing application scenarios of the pinhole camera with specific parameters, bringing convenience to users and saving the cost.

### Summary

An object of embodiments of the present application is to provide a lens assembly, an imaging device, a detection device and a detection system, which are configured to simplify a process of acquiring an image of a side circumference of a workpiece, improve an image acquisition efficiency, improve quality of the acquired image, and solve a problem that when a side circumference of a piece with a metal surface is imaged in a prior art, stains of non-metal components on the surface cannot be imaged or a formed image has a poor contrast.

The present application provides a lens assembly applied to a camera lens, the lens assembly including: a plurality of lens elements arranged co-axially; wherein an entrance pupil point and a front focal point of the lens assembly are both located outside the lens assembly on an object side of the lens assembly; an object-side principal point of the lens assembly is farther away from the lens assembly than the front focal point; a spread angle of lateral surface imaging corresponding to the lens assembly satisfies α=arctan|H/2f|, wherein α represents the spread angle of lateral surface imaging, 18°5α525°, H represents a full field image height corresponding to the lens assembly, f represents a focal length of the lens assembly, and f<0.

In the present application, the entrance pupil point and the front focal point of the lens assembly including the plural coaxially arranged lens elements are both located outside the lens assembly on the object side of the lens assembly, and the object-side principal point of the lens assembly is farther away from the lens assembly than the front focal point, such that a single imaging device including the lens assembly can simultaneously image a surface of the workpiece directly facing the imaging device and the side circumference of the workpiece; the spread angle of lateral surface imaging corresponding to the lens assembly satisfies α=arctan|H/2f|, wherein α represents the spread angle of lateral surface imaging, 18°≤α≤25°, H represents the full field image height corresponding to the lens assembly, f represents the focal length of the lens assembly, and f<0, such that the single imaging device including the lens assembly can be suitable for imaging of the side circumference of the piece with a metal surface, and particularly, an image of the non-metal stains or defects on the metal surface has superior imaging quality.

Optionally, the focal length of the lens assembly has a range of -18mm<f<-2mm.

Optionally, the focal length of the lens assembly has a range of -11mm<f<-3mm.

Optionally, a distance between the entrance pupil point and the front focal point is less than 1mm.

Optionally, principal rays have a maximum angular difference of 1° relative to each other at an image plane of the lens assembly.

In the present application, the principal rays have a maximum angular difference of 1° relative to each other at the image plane of the lens assembly, thus avoiding a problem that tiny defects on the side circumference of the workpiece are not visible due to a Fresnel effect.

Optionally, the distance between the entrance pupil point and the front focal point is less than 0.5mm.

In the present application, the distance between the front focal point and the entrance pupil point of the lens assembly is reduced as much as possible, such that an angle of the principal ray relative to an optical axis in an imaging light path is further controlled, and therefore, a better imaging effect is achieved on the metal surface, particularly the metal surface with the non-metal stains.

Optionally, the principal rays have a maximum angular difference of 0.3° relative to each other at the image plane of the lens assembly.

Optionally, the distance between the entrance pupil point and the front focal point is less than 1mm.

Optionally, the principal rays have a maximum angular difference of 1° relative to each other at the image plane of the lens assembly.

Optionally, the distance between the entrance pupil point and the front focal point is less than 0.5mm.

Optionally, the principal rays have a maximum angular difference of 0.3° relative to each other at the image plane of the lens assembly.

Optionally, the plurality of lens elements include a front lens group and a rear lens group which are arranged from the object side of the lens assembly to an image side of the lens assembly, the front lens group and the rear lens group both have positive optical power (positive optical focal power), and a distance Δ between a rear focal point of the front lens group and a front focal point of the rear lens group satisfies 1.5f1<Δ<2.5f1, wherein f1 represents a focal length of the front lens group.

Optionally, the front lens group includes a first lens element, a second lens element, a third lens element and a fourth lens element arranged from the object side of the lens assembly to the image side of the lens assembly; the first lens element has positive optical power, an image side surface of the first lens element is a convex surface, one of the second lens element, the third lens element and the fourth lens element has a first attribute, the other two thereof have a second attribute and a third attribute respectively, the first attribute includes negative optical power (negative optical focal power), the second attribute includes positive optical power and a convex surface as an object side surface, and the third attribute includes positive optical power and a biconvex lens.

In the present application, by setting the front lens group in this way, imaging quality of the imaging device including the lens assembly according to the present application can be improved to some extent.

Optionally, an Abbe number of the first lens element is greater than 70, each of the second attribute and the third attribute further includes an Abbe number greater than 70, and the first attribute further includes a refractive index greater than 1.8.

Optionally, the rear lens group includes a fifth lens element, a sixth lens element, a seventh lens element, an eighth lens element, a ninth lens element and a tenth lens element arranged from the object side of the lens assembly to the image side of the lens assembly; the fifth lens element is a biconcave lens and has negative optical power, the sixth lens element is a biconvex lens and has positive optical power, the seventh lens element is a biconcave lens and has negative optical power, an image side surface of the eighth lens element is a convex surface, the eighth lens element has positive optical power, the ninth lens element is a biconvex lens and has positive optical power, an image side surface of the tenth lens element is a convex surface, and the tenth lens element has negative optical power; or, the fifth lens element is a biconcave lens and has negative optical power, an image side surface of the sixth lens element is a convex surface, the sixth lens element has positive optical power, the seventh lens element is a meniscus lens and has positive optical power, the eighth lens element is a biconcave lens and has negative optical power, the ninth lens element is a biconvex lens and has positive optical power, and the tenth lens element is a biconvex lens and has positive optical power; or, the fifth lens element is a biconvex lens and has positive optical power, the sixth lens element is a biconcave lens and has negative optical power, an image side surface of the seventh lens element is a concave surface, the seventh lens element has negative optical power, the image side surface of the eighth lens element is a convex surface, the eighth lens element has positive optical power, the ninth lens element is a biconvex lens and has positive optical power, and the tenth lens element is a biconvex lens and has positive optical power.

In the present application, by setting the rear lens group in this way, the imaging quality of the imaging device including the lens assembly according to the present application can be further improved.

Optionally, the plurality of lens elements include a first lens element, a second lens element, a third lens element and a fourth lens element arranged from the object side of the lens assembly to the image side of the lens assembly; the first lens element has positive optical power, an image side surface of the first lens element is a convex surface, one of the second lens element, the third lens element and the fourth lens element has a first attribute, the other two thereof have a second attribute and a third attribute respectively, the first attribute includes negative optical power, the second attribute includes positive optical power and a convex surface as an object side surface, and the third attribute includes positive optical power and a biconvex lens.

Optionally, an Abbe number of the first lens element is greater than 70, each of the second attribute and the third attribute further includes an Abbe number greater than 70, and the first attribute further includes a refractive index greater than 1.8.

Optionally, the plurality of lens elements further include a fifth lens element, a sixth lens element, a seventh lens element, an eighth lens element, a ninth lens element and a tenth lens element arranged from the object side of the lens assembly to the image side of the lens assembly, and the first lens element to the tenth lens element are sequentially arranged from the object side of the lens assembly to the image side of the lens assembly; the fifth lens element is a biconcave lens and has negative optical power, the sixth lens element is a biconvex lens and has positive optical power, the seventh lens element is a biconcave lens and has negative optical power, an image side surface of the eighth lens element is a convex surface, the eighth lens element has positive optical power, the ninth lens element is a biconvex lens and has positive optical power, an image side surface of the tenth lens element is a convex surface, and the tenth lens element has negative optical power; or, the fifth lens element is a biconcave lens and has negative optical power, an image side surface of the sixth lens element is a convex surface, the sixth lens element has positive optical power, the seventh lens element is a meniscus lens and has positive optical power, the eighth lens element is a biconcave lens and has negative optical power, the ninth lens element is a biconvex lens and has positive optical power, and the tenth lens element is a biconvex lens and has positive optical power; or, the fifth lens element is a biconvex lens and has positive optical power, the sixth lens element is a biconcave lens and has negative optical power, an image side surface of the seventh lens element is a concave surface, the seventh lens element has negative optical power, the image side surface of the eighth lens element is a convex surface, the eighth lens element has positive optical power, the ninth lens element is a biconvex lens and has positive optical power, and the tenth lens element is a biconvex lens and has positive optical power.

Optionally, the lens element is a spherical lens.

The present application further provides an imaging device, including the above-mentioned lens assembly and a photosensitive element provided on the image side of the lens assembly, the photosensitive element being configured to catch light projected onto a surface of the photosensitive element.

Optionally, the imaging device further includes an adjusting mechanism, the adjusting mechanism being located between the photosensitive element and the lens assembly, and configured to adjust an included angle between a photosensitive surface of the photosensitive element and an optical axis of the lens assembly.

In the present application, due to properties of the lens assembly and the inclined arrangement between the photosensitive surface of the photosensitive element and the optical axis of the lens assembly, better image quality and a larger depth of field can be realized under a condition that a to-be-measured surface (for example, the surface of the workpiece facing the lens assembly) is not perpendicular to the optical axis of the lens assembly or the to-be-measured side circumference (for example, the surface of the side circumference of the workpiece) is not parallel to the optical axis of the lens assembly, such that wider imaging application scenarios can be met.

The present application further provides a detection device, including the above-mentioned imaging device and a processor in signal connection with the imaging device, wherein the processor is configured to perform analysis processing based on an image which is acquired by the imaging device and contains a shot piece image.

The present application further provides a detection system, including: a feeding mechanism, a logistics mechanism, a sorting mechanism and the above-mentioned detection device; wherein the feeding mechanism is configured to convey a to-be-detected piece to the logistics mechanism; the logistics mechanism is configured to drive the detected piece to move; the imaging device is provided opposite to a table top of the logistics mechanism and configured to acquire an image containing the detected piece image when the logistics mechanism drives the detected piece to pass through a view field of the imaging device, and the processor is configured to generate a sorting instruction based on the image; the sorting mechanism is in signal connection with the processor and configured to sort the detected piece based on the sorting instruction.

Details of one or more embodiments of the present application are set forth in the accompanying drawings and the description below. Other features, objects, and advantages of the present application will be apparent from the description, the accompanying drawings, and the claims.

### Brief Description of Drawings

To describe the technical solutions in the embodiments of the present application more clearly, the following briefly describes the accompanying drawings required in the embodiments of the present application. It should be understood that the following accompanying drawings show merely some embodiments of the present application and therefore should not be considered as limiting the scope, and a person of ordinary skill in the art may still derive other related drawings from these accompanying drawings without creative efforts.
FIG. 1 is a schematic structural diagram of a lens assembly according to an embodiment of the present application.
FIG. 2 is an enlarged view of a rear lens group in FIG. 1.
FIG. 3 is a graph of a modulation transfer function (MTF) versus a spatial frequency of the lens assembly shown in FIG. 1 at a working distance and a view field corresponding to group 1 in Table 5.
FIG. 4 is a graph of the MTF versus the spatial frequency of the lens assembly shown in FIG. 1 at a working distance and a view field corresponding to group 2 in Table 5.
FIG. 5 is a graph of the MTF versus the spatial frequency of the lens assembly shown in FIG. 1 at a working distance and a view field corresponding to group 3 in Table 5.
FIG. 6 is a graph of the MTF versus the spatial frequency of the lens assembly shown in FIG. 1 at a working distance and a view field corresponding to group 4 in Table 5.
FIG. 7 is a schematic structural diagram of an optional rear lens group in the present application.
FIG. 8 is an enlarged view of the rear lens group in FIG. 7.
FIG. 9 is a graph of an MTF versus a spatial frequency of a lens assembly shown in FIG. 7 at the working distance and the view field corresponding to group 1 in Table 5.
FIG. 10 is a graph of the MTF versus the spatial frequency of the lens assembly shown in FIG. 7 at the working distance and the view field corresponding to group 2 in Table 5.
FIG. 11 is a graph of the MTF versus the spatial frequency of the lens assembly shown in FIG. 7 at the working distance and the view field corresponding to group 3 in Table 5.
FIG. 12 is a graph of the MTF versus the spatial frequency of the lens assembly shown in FIG. 7 at the working distance and the view field corresponding to group 4 in Table 5.
FIG. 13 is a schematic structural diagram of an optional lens assembly according to the present application.
FIG. 14 is an enlarged view of a rear lens group in FIG. 13.
FIG. 15 is a graph of an MTF versus a spatial frequency of the lens assembly shown in FIG. 13 at a working distance and a view field corresponding to group 1 in Table 12.
FIG. 16 is a graph of the MTF versus the spatial frequency of the lens assembly shown in FIG. 13 at a working distance and a view field corresponding to group 2 in Table 12.
FIG. 17 is a graph of the MTF versus the spatial frequency of the lens assembly shown in FIG. 13 at a working distance and a view field corresponding to group 3 in Table 12.
FIG. 18 is a graph of the MTF versus the spatial frequency of the lens assembly shown in FIG. 13 at a working distance and a view field corresponding to group 4 in Table 12.
FIG. 19 is a schematic diagram of adjustment of an optical axis of a photosensitive element and an optical axis of the lens assembly by an adjusting mechanism in an embodiment of the present application.

Reference numerals: lens assembly-10, 10a, 10b; front lens group-11, 11a, 11b; rear lens group-12, 12a, 12b; first lens element-111, 111a, 111b; second lens element-112, 112a, 112b; third lens element-113, 113a, 113b; fourth lens element-114, 114a, 114b; fifth lens element-121, 121a, 121b; sixth lens element-122, 122a, 122b; seventh lens element-123, 123a, 123b; eighth lens element-124, 124a, 124b; ninth lens element-125, 125a, 125b; tenth lens element-126, 126a, 126b; aperture diaphragm-13a, 13b; imaging device-20; photosensitive element-21; adjusting mechanism-22; detected piece-30.

### Detailed Description

In order to make objects, technical solutions and advantages of the present application more apparent, the present application will be described in further detail with reference to the following drawings and embodiments. It should be understood that the specific embodiments described herein are merely for explaining the present application and are not intended to limit the present application.

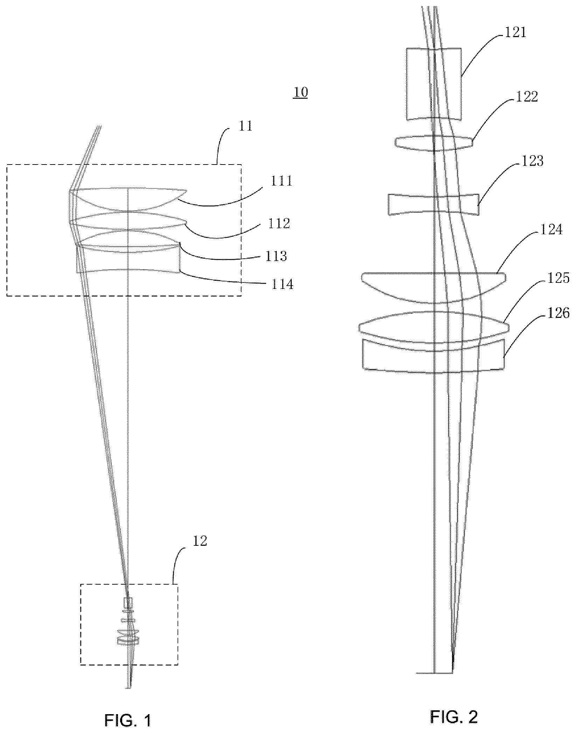

Referring to FIG. 1, an embodiment of the present application provides a lens assembly 10 applied to a camera lens. The lens assembly 10 includes a plurality of (at least two) lens elements. The plurality of lens elements are arranged co-axially. The lens element may be a spherical lens or an aspherical lens, or the like.

An entrance pupil point and a front focal point of lens assembly 10 are both located outside the lens assembly 10 on an object side of the lens assembly 10. It should be noted that an entrance pupil is an effective aperture for limiting an incident light beam, and is generally an image of a front optical system formed by an aperture diaphragm, or may be naturally formed according to a finite aperture of a lens optical system. Correspondingly, the entrance pupil point generally refers to a position of the image (first order image/Gaussian image) of the front optical system formed by the aperture diaphragm. The front focal point refers to an object-side focal point of the lens assembly 10. In the present embodiment, a distance between the entrance pupil point and the front focal point is less than 1mm. Preferably, the entrance pupil point and the front focal point have a distance less than 0.5mm, or even coincide. The distance between the front focal point and the entrance pupil point of the lens assembly 10 is reduced as much as possible, such that an angle of a principal ray relative to an optical axis in an imaging light path is further specified, and therefore, a better imaging effect is achieved on a metal surface, particularly a metal surface with non-metal stains.

It should be noted that, due to existence of high order aberrations, in order to make the statement of the present solution clearer, the entrance pupil point, the focal point, a focal length, or the like, in the embodiment of the present application are described with respect to first order characteristics (or referred to as paraxial characteristics) of the lens assembly 10.

An object-side principal point of the lens assembly 10 is farther away from the lens assembly 10 than the front focal point. It should be noted that the principal point is an intersection point of a principal plane and the optical axis. In the present embodiment, the object-side principal point of the lens assembly 10 is an intersection point of an object-side principal plane of the lens assembly 10 and the optical axis of the lens assembly 10.

A spread angle of lateral surface imaging corresponding to the lens assembly 10 is a fixed value and satisfies α=arctan|H/2f|, wherein α represents the spread angle of lateral surface imaging, 18°≤α≤25°, H represents a full field image height corresponding to the lens assembly 10, f represents the focal length of the lens assembly 10, and f<0.

In the present embodiment, a surface perpendicular to the optical axis of the lens assembly 10 and a side circumference parallel to the lens assembly 10 may be simultaneously imaged onto an image plane using the lens assembly 10. Taking a cylindrical workpiece as an example, a circular upper surface (i.e., a surface directly facing the lens assembly 10) and a side circumferential cylindrical surface of the workpiece can be simultaneously imaged using the lens assembly 10, the upper surface is imaged as a circle, and the side circumferential cylindrical surface can be imaged as a ring concentric with the circle (at this point, a central axis of the cylindrical workpiece is coaxial with the optical axis of the lens assembly 10). Imaging quality of the side circumference is determined by the spread angle of lateral surface imaging, and by limiting the spread angle of lateral surface imaging to 18° to 25°, on the basis of imaging the side circumference of the workpiece parallel to the optical axis, the imaging quality can be improved, and particularly, the imaging quality of the non-metal stains or defects on the metal surface is improved.

The inventor of the present application finds after study that the non-metal stains on the side circumference of the workpiece exhibit different polarization characteristics for incident rays at different angles; that is, for the incident rays at different angles, the metal surface of the workpiece and surfaces of the non-metal stains exhibit different light absorption rates, and a difference is obvious. For example, the surfaces of the non-metal stains have a high absorption rate for normally incident rays, while the metal surface of the workpiece has a low absorption rate and a high reflectance for the normally incident rays, thereby realizing effective imaging of the non-metal stains on the metal surface of the workpiece. In contrast, when the non-metal stains exhibit a certain polarization characteristic for incident rays within a certain angle interval, the absorption rate is reduced and the reflectance is increased, imaging display of the non-metal stains on the metal surface is suppressed.

It should be noted that the lens assembly 10 has a certain view field (visible range) when imaging a plane perpendicular to the optical axis at a certain working distance (representing a distance from an object lens of the lens assembly 10). The view field is generally circular and has a radius R. The entire view field is imaged by the lens assembly 10 as a circle with a radius r. A full field image height H mentioned in the foregoing embodiment is a diameter (i.e., 2r) of the circle with a radius r.

It may be appreciated that the lens assembly 10 has different sizes of view fields when imaging planes at different working distances, but the full field image heights H corresponding to the view fields for different distances are the same or slightly different (for example, no more than 1mm), and the full field image heights H for different working distances can be configured as the above-mentioned spread angle of lateral surface imaging formula.

The focal length of the lens assembly 10 may have a range of -18mm<f<-2mm. Correspondingly, a size of a target surface of a photosensitive element in an imaging device used in cooperation with the lens assembly 10 is in the range of 1/4-1.1 inches. In the present embodiment, the focal length of the lens assembly 10 may be, for example, any one of -15mm, -11mm, -7mm, - 3mm, and -1mm or a value therebetween. Preferably, the focal length of the lens assembly 10 has a range of -11mm<f<-3mm. Thus, the lens assembly 10 can be better matched with different sizes of photosensitive elements, thereby facilitating an improvement of a resolution of an image of the workpiece for surface detection or metal surface detection.

It may be understood that a corresponding relationship among the size of the target surface of the common photosensitive element, the corresponding image height and the corresponding focal length of the lens assembly 10 is shown in the following Table.

**Table 1**

| Size of target surface of photosensitive element (unit: inch) | Image height (mm) | Focal length of lens assembly (mm) |
|---|---|---|
| 1/2 | 4.8 | -6 |
| 1/1.8 | 5.4 | -6.75 |
| 2/3 | 6.6 | -8.25 |

In the present embodiment, principal rays have a maximum angular difference of 1° relative to each other at the image plane of the lens assembly 10. The principal ray refers to a ray which is emitted by an object and can reach a center of the aperture diaphragm (or a ray which is emitted by the object and can pass through a center of the entrance pupil or an opposite extension line of which can pass through the center of the entrance pupil). The principal rays have a maximum angular difference of 1° relative to each other at the image plane of the lens assembly 10, such that the lens assembly 10 can have a better focal depth, and thus, better imaging quality can be achieved when the side circumference of a workpiece with a certain thickness is imaged. Preferably, the principal rays have a maximum angular difference of 0.3° relative to each other at the image plane of the lens assembly 10.

In the present embodiment, the plurality of lens elements include a front lens group 11 and a rear lens group 12 arranged from the object side of the lens assembly 10 to an image side of the lens assembly 10. Each of the front lens group 11 and the rear lens group 12 has positive optical power. Optionally, a distance Δ between a rear focal point of the front lens group 11 (i.e., an image-side focal point of the front lens group 11) and a front focal point of the rear lens group 12 (i.e., an object-side focal point of the rear lens group 12) satisfies 1.5f1<Δ<2.5f1, wherein f1 denotes a focal length of the front lens group.

In the present embodiment, a ratio k between the focal length f2 of the rear lens group 12 and the focal length f1 of the front lens group 11 satisfies the following relationship: k=f2/f1, and 0.08<k<0.15. Optionally, the focal length of the front lens group 11 ranges from 80 to 120mm, and the focal length of the rear lens group 12 ranges from 8 to 16mm. Exemplarily, the focal length of the front lens group 11 may be any one of 80mm, 90mm, 100mm, 110mm, and 120mm or a value therebetween; the focal length of the rear lens group 12 may be any one of 8mm, 10mm, 12mm, 14mm, and 16mm or a value therebetween. By configuring the focal lengths of the rear lens group 12 and the front lens group 11 in this way, better magnifications can be realized, such that the rear lens group 12 has a lower implementation cost, and meanwhile, the imaging quality is further improved.

In the present embodiment, an average effective clear aperture of the front lens group 11 is 7 to 16 times that of the rear lens group 12. By configuring the average effective clear apertures of the front lens group 11 and the rear lens group 12 in this way, vignetting of the lens assembly 10 can be reduced, and light rays emitted from different positions of the object can be imaged indiscriminately, which thus improves imaging consistency, and is favorable for a harsh industrial environment for defect detection.

In the present embodiment, the front lens group 11 includes a first lens element 111, a second lens element 112, a third lens element 113 and a fourth lens element 114 arranged from the object side of the lens assembly 10 to the image side of the lens assembly 10. The first lens element 111 has positive optical power, and an image side surface of the first lens element 111 is a convex surface. One of the second lens element 112, the third lens element 113 and the fourth lens element 114 has a first attribute, and the other two thereof have a second attribute and a third attribute respectively. The first attribute includes negative optical power. The second attribute includes positive optical power and a convex surface as an object side surface. The third attribute includes positive optical power and a biconvex lens. By setting the front lens group in this way, imaging quality of the imaging device including the lens assembly 10 can be improved to some extent.

Optionally, an Abbe number (i.e., dispersion coefficient) of the first lens element 111 is greater than 70.

Optionally, each of the second attribute and the third attribute may further include an Abbe number greater than 70. The first attribute may further include a refractive index greater than 1.8.

In the embodiment shown in FIG. 1, the second lens element 112 has the third attribute. The third lens element 113 has the second attribute. The fourth lens element 114 has the first attribute and is a biconcave lens.

In the embodiment of the present application, by performing the foregoing setting on the lens elements included in the front lens group 11, on the one hand, the lens assembly 10 can have better image quality under a high magnification (image vs object), and on the other hand, a technical bias that a "purple fringe" of an image of the object caused by chromatic dispersion cannot be solved when a high magnification camera lens of a non-cemented lens structure in a prior art is used for imaging is broken; that is, by performing the foregoing setting on the lens elements included in the front lens group 11, the lens assembly 10 according to the present application can solve the "purple fringe" of the image of the object caused by chromatic dispersion even when the non-cemented lens structure is adopted; moreover, compared with a cemented lens structure, a structure of the lens assembly 10 is simplified, and the mounting difficulty is reduced.

Referring to FIGS. 1 and 2 together, the rear lens group 12 includes a fifth lens element 121, a sixth lens element 122, a seventh lens element 123, an eighth lens element 124, a ninth lens element 125 and a tenth lens element 126 arranged from the object side of the lens assembly 10 to the image side of the lens assembly 10.

The fifth lens element 121 is a biconcave lens and has negative optical power. The sixth lens element 122 is a biconvex lens and has positive optical power. The seventh lens element 123 is a biconcave lens and has negative optical power. An image side surface of the eighth lens element 124 is a convex surface, and the eighth lens element 124 has positive optical power. The ninth lens element 125 is a biconvex lens and has positive optical power. An image side surface of the tenth lens element 126 is a convex surface, and the tenth lens element 126 has negative optical power. By setting the rear lens group 12 in this way, the imaging quality of the imaging device including the lens assembly 10 can be further improved.

In the present embodiment, structural parameters of each lens element in the lens assembly 10 are shown in the following Table.

**Table 2**

| SURF | RADIUS | THICKNESS | MEDIUM | INDEX | V-NUMBER |
|---|---|---|---|---|---|
| 0 | INFINITE | 105.5 | Air | | |
| 1 | 625.70536 | 20.28634 | Glass | 1.501 | 77.45 |
| 2 | -85.06061 | 1 | Air | | |
| 3 | 169.82707 | 15.14829 | Glass | 1.501 | 77.46 |
| 4 | -252.62377 | 1.1195 | Air | | |
| 5 | 96.73819 | 14.22836 | Glass | 1.501 | 77.46 |
| 6 | -699.99725 | 5.10917 | Air | | |
| 7 | -182.83545 | 14.84872 | Glass | 1.9 | 29.02 |
| 8 | 273.00838 | 289.28831 | Air | | |
| 9 | -14.16403 | 8.56406 | Glass | 1.9 | 38.48 |
| 10 | 16.96304 | 2.29724 | Air | | |
| 11 | 33.91019 | 1.96922 | Glass | 1.9 | 22.55 |
| 12 | -17.645 | 5.84837 | Air | | |
| 13 | -40.32761 | 1.77267 | Glass | 1.9 | 22.55 |
| 14 | 31.66893 | 7.89439 | Air | | |
| 15 | 615.81065 | 3.86557 | Glass | 1.50768 | 76.8 |
| 16 | -16.09775 | 1 | Air | | |
| 17 | 27.73532 | 4.06777 | Glass | 1.66782 | 61.16 |
| 18 | -30.92936 | 1 | Air | | |
| 19 | -26.99265 | 2.67304 | Glass | 1.9 | 22.55 |
| 20 | -84.49752 | 38.17873 | Air | | |
| IMG | INFINITE | | | | |

In the Table, SURF denotes the object, or the object side surface of each lens element, or the image side surface of each lens element, or an imaging plane. Specifically, SURF is 0 for the object, SURF is 1 for the object side surface of the first lens element 111, SURF is 2 for the image side surface of the first lens element 111, SURF is 3 for the object side surface of the second lens element 112, SURF is 4 for the image side surface of the first lens element 112, and so on, SURF is 19 for the object side surface of the tenth lens element 126, SURF is 20 for the image side surface of the tenth lens element 126, and SURF is IMG for the imaging plane. RADIUS corresponds to a radius of curvature in mm. RADIUS which is INFINITE indicates that the radius of curvature is infinite. RADIUS which is positive indicates that a circle center is located on the image side of the lens assembly 10; RADIUS which is negative indicates that the circle center is located on the object side of the lens assembly 10. THICKNESS corresponds to a distance between current SURF and next adjacent SURF in SURF numbered 0-20. MEDIUM corresponds to a medium between current SURF and next adjacent SURF in SURF numbered 0-20. INDEX corresponds to a refractive index. V-NUMBER corresponds to a dispersion coefficient (Abbe number).

It may be understood that in the above Table, the glass in the MEDIUM column is only an example, and in other embodiments, resin, or the like, may be adopted.

In the present embodiment, the effective clear apertures (semi-apertures) of the object side surface and the image side surface of each lens element in the lens assembly 10 can be shown in the following Table.

**Table 3**

| SURF | X or R-APER |
|---|---|
| 1 | 51.121 |
| 2 | 51.348 |
| 3 | 51.3897 |
| 4 | 51.1878 |
| 5 | 46.223 |
| 6 | 45.8756 |
| 7 | 45.2771 |
| 8 | 41.744 |
| 9 | 2.2655 |
| 10 | 3.4544 |
| 11 | 4.6988 |
| 12 | 4.8737 |
| 13 | 5.438 |
| 14 | 5.738 |
| 15 | 8.8947 |
| 16 | 9.1447 |
| 17 | 9.5066 |
| 18 | 9.4089 |
| 19 | 8.9868 |
| 20 | 8.8573 |
| 21 | 2.3302 |

In the Table, SURF denotes the object side surface of each lens element, or the image side surface of each lens element, or the image plane. Specifically, SURF numbered 1-20 corresponds to the object side surfaces and the image side surfaces of the first lens element 111 to the tenth lens element 126 in sequence. SURF numbered 21 corresponds to IMG in Table 2, i.e., the image plane. (X OR R-APER) corresponds to the effective clear aperture (here, semi-aperture) in mm.

In the present embodiment, optical parameters of the lens assembly 10 can be shown in the following Table.

**Table 4**

| | | | |
|---|---|---|---|
| OPTICAL POWER | -0.167687 | EFFECTIVE FOCAL LENGTH | -5.963503mm |
| FRONT FOCAL LENGTH | 5.963503mm | REAR FOCAL LENGTH | -5.963503mm |
| FRONT FOCAL POINT | -118.04366mm | REAR FOCAL POINT | 40.998411mm |
| FRONT PRINCIPAL POINT | -124.007163mm | REAR PRINCIPAL POINT | 46.961914mm |
| PRINCIPAL POINT SEP. | 572.950088mm | | |
| FRONT NODAL POINT | -124.007163mm | REAR NODAL POINT | 46.961914mm |
| ENTRANCE PUPIL POINT | -118.041819mm | EXIT PUPIL POINT | -19275.31654mm |
| ENT PUP SEMI-AP. | -0.376255mm | EXT PUP SEMI-AP. | 1218.721866mm |
| OBJECT POINT | -105.5mm | IMAGE POINT | 38.163244mm |
| OBJECT SEMI-AP. | -5mm | GAUSS. IM. HT. | 2.377099mm |
| OBJECT MAGN. | -0.47542 | PUPIL MAGN. | -3239.088555 |
| OVERALL LENGTH | 401.981011mm | | |

In the Table, FRONT FOCAL POINT represents a distance between the front focal point and an intersection point of the optical axis of the lens assembly and the surface with SURF numbered 1; PRINCIPAL POINT SEP. represents a distance between the object-side principal point and an image-side principal point; ENTRANCE PUPIL POINT represents a distance between the entrance pupil point and the intersection point of the optical axis of the lens assembly and the surface with SURF numbered 1; OBJECT POINT represents a distance between the object point and the intersection point of the optical axis of the lens assembly and the surface with SURF numbered 1; OBJECT SEMI-AP. represents a semi-aperture of the view field; OVERALL LENGTH represents a distance between the intersection point of the optical axis of the lens assembly and the surface with SURF numbered 1 and an intersection point of the optical axis of the lens assembly and the surface with SURF numbered 20; REAR FOCAL POINT represents a distance between the rear focal point and the intersection point of the optical axis of the lens assembly and the surface with SURF numbered 20; EXIT PUPIL POINT represents a distance between the optical axis of the lens assembly and the surface with SURF numbered 20; IMAGE POINT represents a distance between the image point and the intersection point of the optical axis of the lens assembly and the surface with SURF numbered 20; GAUSS. IM. HT. corresponds to half of the full field image height. In addition, in the Table, the distance from the object side to the image side of the lens assembly 10 is positive, and the distance from the image side to the object side of the lens assembly 10 is negative.

In the present embodiment, the working distance and imaging view field of the lens assembly 10 can be shown in the following Table.

**Table 5**

| Group | Working distance (mm) | View field (mm) |
|---|---|---|
| 1 | 105.5 | 10 |
| 2 | 88 | 24 |
| 3 | 63 | 44 |
| 4 | 35.5 | 66 |

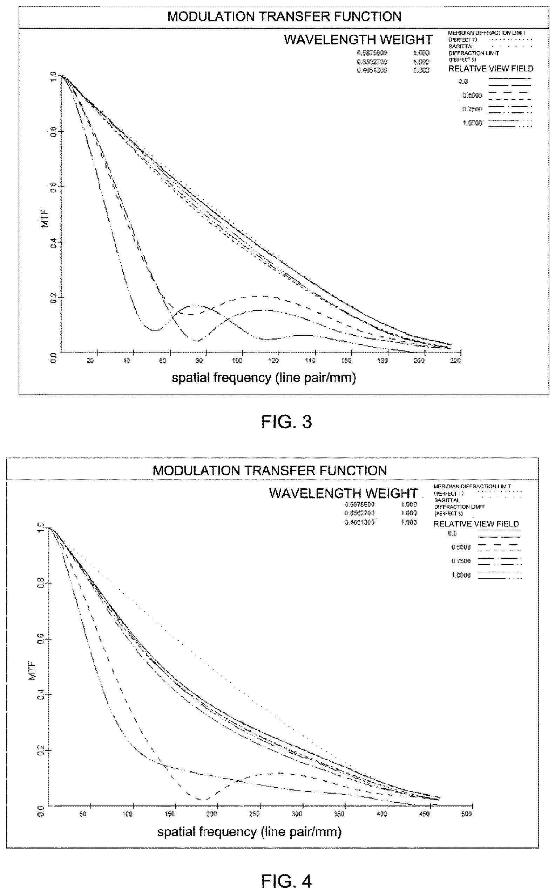

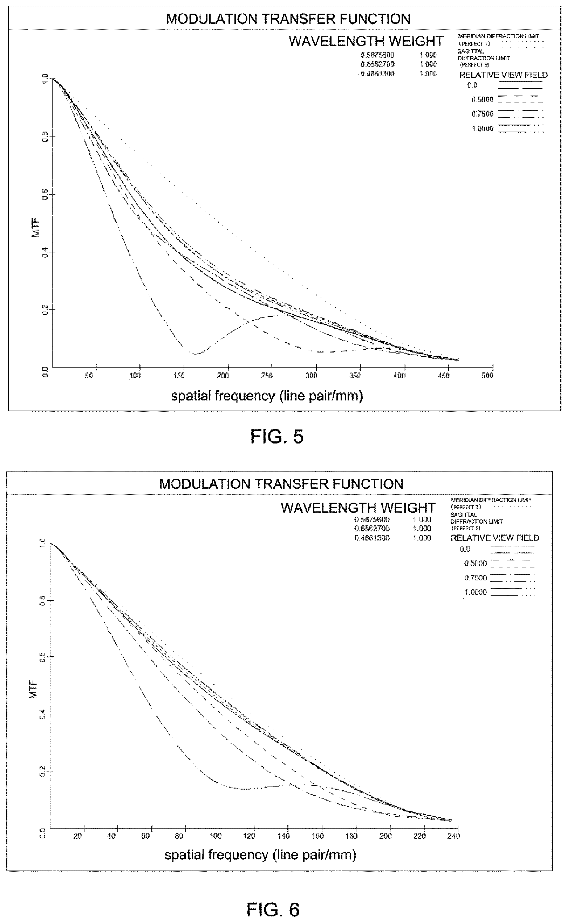

The working distance is a distance between an intersection point of the optical axis of the lens assembly 10 and the object side surface of the first lens element 111 and the object. FIGS. 3 to 6 show graphs of an MTF versus a spatial frequency of the lens assembly 10 at the working distances and the view fields corresponding to groups 1 to 4 in Table 5 respectively.

In the embodiment of the present application, the entrance pupil point and the front focal point of the lens assembly 10 including the plural coaxial lens elements are both located outside the lens assembly 10 on the object side of the lens assembly 10, and the object-side principal point of the lens assembly 10 is farther away from the lens assembly 10 than the front focal point, such that a single imaging device including the lens assembly 10 can simultaneously image the surface of the workpiece directly facing the imaging device and the side circumference of the workpiece; the spread angle of lateral surface imaging corresponding to the lens assembly 10 satisfies α=arctan|H/2f|, wherein α represents the spread angle of lateral surface imaging, 18°≤α≤25°, H represents the full field image height corresponding to the lens assembly 10, f represents the focal length of the lens assembly 10, and f<0, such that the single imaging device including the lens assembly 10 can be suitable for imaging of the side circumference of the piece with a metal surface, and particularly, an image of the non-metal stains or defects on the metal surface has superior imaging quality.

It may be understood that in other embodiments, the rear lens group 12 may be a standard camera lens and has positive optical power.

In addition, in the present embodiment, the spread angle of lateral surface imaging is 21.7°.

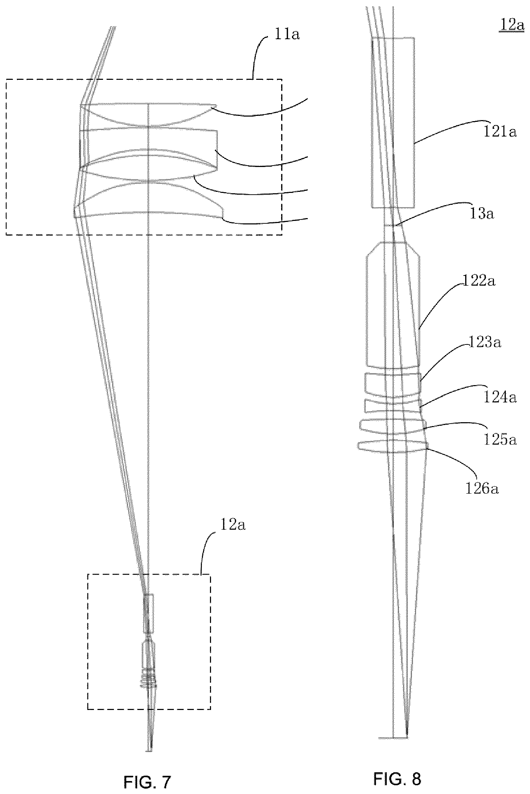

Reference is made to FIG. 7 which shows an optional lens assembly 10a according to the present application, which has a similar structure to the lens assembly 10, except for the front lens group 11a, the rear lens group 12a, structural parameters of elements of the lens assembly 10a, the effective clear aperture, and optical parameters of the lens assembly 10a.

The following description focuses on the differences between the lens assembly 10a and the lens assembly 10.

In the present embodiment, the lens assembly 10a includes a front lens group 11a, a rear lens group 12a and an aperture diaphragm 13a arranged co-axially. The front lens group 11a and the rear lens group 12a are arranged from the object side of the lens assembly 10a to the image side of the lens assembly 10a.

In the present embodiment, the front lens group 11a includes a first lens element 111a, a second lens element 112a, a third lens element 113a and a fourth lens element 114a arranged from the object side of the lens assembly 10a to the image side of the lens assembly 10a.

The first lens element 111a has positive optical power, and an image side surface of the first lens element 111a is a convex surface. The second lens element 112a has negative optical power (corresponding to the first attribute), and the second lens element 112a is a concave lens and has a convex object side surface. The third lens element 113a has positive optical power and is a biconvex lens (corresponding to the third attribute). The fourth lens element 114a has positive optical power and an object side surface is a convex surface (corresponding to the second attribute).

Referring to FIG. 8, the rear lens group 12a includes a fifth lens element 121a, a sixth lens element 122a, a seventh lens element 123a, an eighth lens element 124a, a ninth lens element 125a and a tenth lens element 126a arranged from the object side of the lens assembly 10a to the image side of the lens assembly 10a. Specifically, the fifth lens element 121a is a biconcave lens and has negative optical power; an image side surface of the sixth lens element 122a is a convex surface and the sixth lens element 122a has positive optical power; the seventh lens element 123a is a meniscus lens and has positive optical power; the eighth lens element 124a is a biconcave lens and has negative optical power; the ninth lens element 125a is a biconvex lens and has positive optical power; the tenth lens element 126a is a biconvex lens and has positive optical power.

In the present embodiment, the aperture diaphragm 13a is provided between the fifth lens element 121a and the sixth lens element 122a.

In the present embodiment, structural parameters of each element in the lens assembly 10a are shown in the following Table.

**Table 6**

| SURF | RADIUS | THICKNESS | MEDIUM | INDEX | V-NUMBER |
|---|---|---|---|---|---|
| 0 | INFINITE | 105.5 | Air | | |
| 1 | 1110.2528 | 15.35567 | Glass | 1.5085 | 76.72 |
| 2 | -86.20457 | 1 | Air | | |
| 3 | 494.82068 | 14.86253 | Glass | 1.9 | 31.47 |
| 4 | 95.42717 | 4.0084 | Air | | |
| 5 | 129.22284 | 17.40319 | Glass | 1.501 | 77.46 |
| 6 | -153.49061 | 1 | Air | | |
| 7 | 81.00558 | 20.41048 | Glass | 1.501 | 77.46 |
| 8 | 327.2402 | 260.89991 | Air | | |
| 9 | -68.08376 | 25.8182 | Glass | 1.87115 | 41.29 |
| 10 | 7.75529 | 2.75563 | Air | | |
| 11 | INFINITE | 2.64173 | Air | | |
| 12 | 48.77675 | 19.26983 | Glass | 1.85777 | 23.47 |
| 13 | -20.09665 | 1 | Air | | |
| 14 | -30.38492 | 3.33214 | Glass | 1.51117 | 76.46 |
| 15 | -12.54758 | 1 | Air | | |
| 16 | -13.84903 | 1 | Glass | 1.88889 | 28.46 |
| 17 | 28.90087 | 1.31941 | Air | | |
| 18 | 61.1692 | 2.24289 | Glass | 1.51228 | 76.35 |
| 19 | -17.78272 | 1 | Air | | |
| 20 | 36.11054 | 1.85186 | Glass | 1.59347 | 68.42 |
| 21 | -26.72644 | 43.6381 | Air | | |
| IMG | INFINITE | | | | |

In the Table, SURF denotes the object, or the object side surface of each lens element, or the image side surface of each lens element, or the aperture diaphragm, or an imaging plane. Specifically, SURF is 0 for the object, SURF numbered 1 to 10 sequentially corresponds to the object side surfaces and the image side surfaces of the first lens element 111a to the fifth lens element 121a, SURF numbered 11 corresponds to the aperture diaphragm, SURF numbered 12 to 21 sequentially corresponds to the object side surfaces and the image side surfaces of the sixth lens element 122a to the tenth lens element 126a, and SURF is IMG for the imaging plane. RADIUS corresponds to a radius of curvature in mm. RADIUS which is INFINITE indicates that the radius of curvature is infinite. RADIUS which is positive indicates that a circle center is located on the image side of the lens assembly 10a; RADIUS which is negative indicates that the circle center is located on the object side of the lens assembly 10a. THICKNESS corresponds to a distance between current SURF and next adjacent SURF in SURF numbered 0-21. MEDIUM corresponds to a medium between current SURF and next adjacent SURF in SURF numbered 0-21. INDEX corresponds to a refractive index. V-NUMBER corresponds to a dispersion coefficient (Abbe number).

In the present embodiment, the effective clear apertures of the object side surface and the image side surface of each lens element and the effective clear aperture (semi-apertures) of the aperture diaphragm in the lens assembly 10a can be shown in the following Table.

**Table 7**

| SURF | X OR R-APER. |
|---|---|
| 1 | 46.2991 |
| 2 | 46.4804 |
| 3 | 47.1202 |
| 4 | 46.4935 |
| 5 | 46.9855 |
| 6 | 47.2107 |
| 7 | 50.98 |
| 8 | 49.9126 |
| 9 | 3.207 |
| 10 | 0.9246 |
| 11 | 1.3203 |
| 12 | 1.9728 |
| 13 | 4.0214 |
| 14 | 4.0531 |
| 15 | 4.2364 |
| 16 | 4.1398 |
| 17 | 4.3374 |
| 18 | 4.7509 |
| 19 | 5.0116 |
| 20 | 5.3194 |
| 21 | 5.3506 |
| 22 | 2.2351 |

In the Table, SURF denotes the object side surface of each lens element, or the image side surface of each lens element, or the aperture diaphragm, or the image plane. Specifically, SURF numbered 1-10 and 12-21 corresponds to the object side surfaces and the image side surfaces of the first lens element 111a to the tenth lens element 126a in sequence. SURF numbered 11 corresponds to the aperture diaphragm 13a, and SURF numbered 22 corresponds to IMG in Table 6, i.e., the image plane. (X OR R-APER) corresponds to the effective clear aperture (here, semi-aperture) in mm.

In the present embodiment, the optical parameters of the lens assembly 10a can be shown in the following Table.

**Table 8**

| | | | |
|---|---|---|---|
| OPTICAL POWER | -0.168086 | EFFECTIVE FOCAL LENGTH | -5.949329mm |
| FRONT FOCAL LENGTH | 5.949329mm | REAR FOCAL LENGTH | -5.949329mm |
| FRONT FOCAL POINT | -118.874158mm | REAR FOCAL POINT | 46.211586mm |
| FRONT PRINCIPAL POINT | -124.823487mm | REAR PRINCIPAL POINT | 52.160915mm |
| PRINCIPAL POINT SEP. | 575.156261mm | | |
| FRONT NODAL POINT | -124.823487mm | REAR NODAL POINT | 52.160915mm |
| ENTRANCE PUPIL POINT | -118.891571mm | EXIT PUPIL POINT | 2078.829887mm |
| ENT PUP SEMI-AP. | -0.401747mm | EXT PUP SEMI-AP. | -137.258947mm |
| OBJECT POINT | -105.5mm | IMAGE POINT | 43.565101mm |
| OBJECT SEMI-AP. | -5mm | GAUSS. IM. HT. | 2.224188mm |
| OBJECT MAGN. | -0.444838 | PUPIL MAGN. | 341.655074 |
| OVERALL LENGTH | 398.171859mm | | |

In the Table, FRONT FOCAL POINT represents a distance between the front focal point and an intersection point of the optical axis of the lens assembly and the surface with SURF numbered 1; PRINCIPAL POINT SEP. represents a distance between the object-side principal point and an image-side principal point; ENTRANCE PUPIL POINT represents a distance between the entrance pupil point and the intersection point of the optical axis of the lens assembly and the surface with SURF numbered 1; OBJECT POINT represents a distance between the object point and the intersection point of the optical axis of the lens assembly and the surface with SURF numbered 1; OBJECT SEMI-AP. represents a semi-aperture of the view field; OVERALL LENGTH represents a distance between the intersection point of the optical axis of the lens assembly and the surface with SURF numbered 1 and an intersection point of the optical axis of the lens assembly and the surface with SURF numbered 21; REAR FOCAL POINT represents a distance between the rear focal point and the intersection point of the optical axis of the lens assembly and the surface with SURF numbered 21; EXIT PUPIL POINT represents a distance between the optical axis of the lens assembly and the surface with SURF numbered 21; IMAGE POINT represents a distance between the image point and the intersection point of the optical axis of the lens assembly and the surface with SURF numbered 21; GAUSS. IM. HT. corresponds to half of the full field image height. In addition, in the Table, the distance from the object side to the image side of the lens assembly 10a is positive, and the distance from the image side to the object side of the lens assembly 10a is negative.

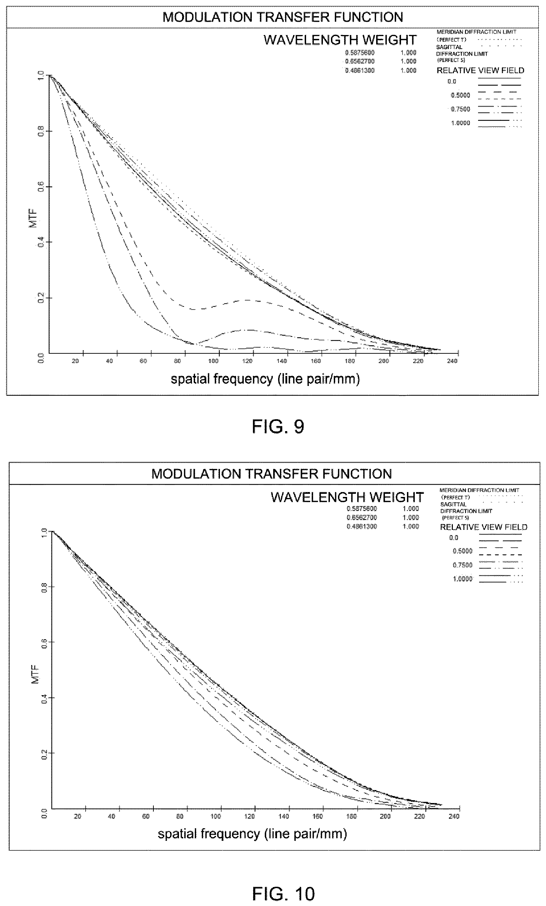

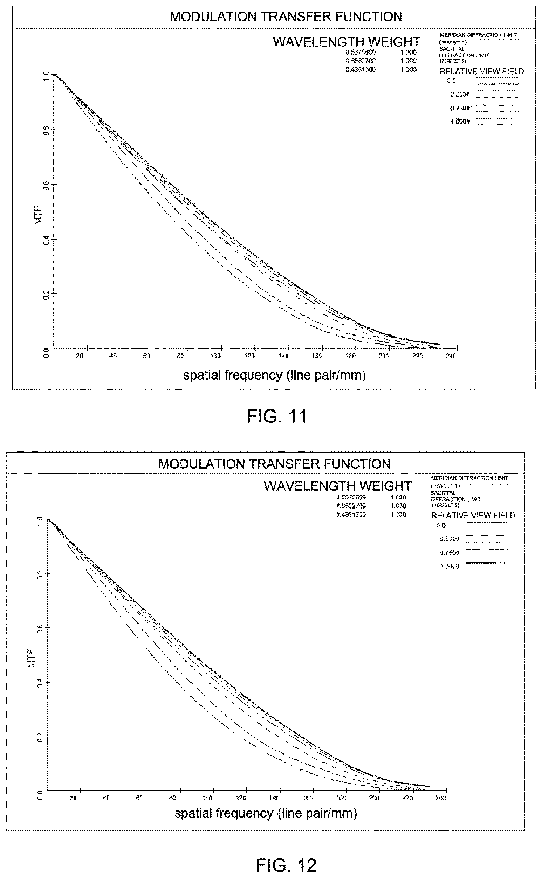

In addition, in the present embodiment, the spread angle of lateral surface imaging is 20.5°. FIGS. 9 to 12 show graphs of an MTF versus a spatial frequency of the lens assembly 10a at the working distances and the view fields corresponding to groups 1 to 4 in Table 5.

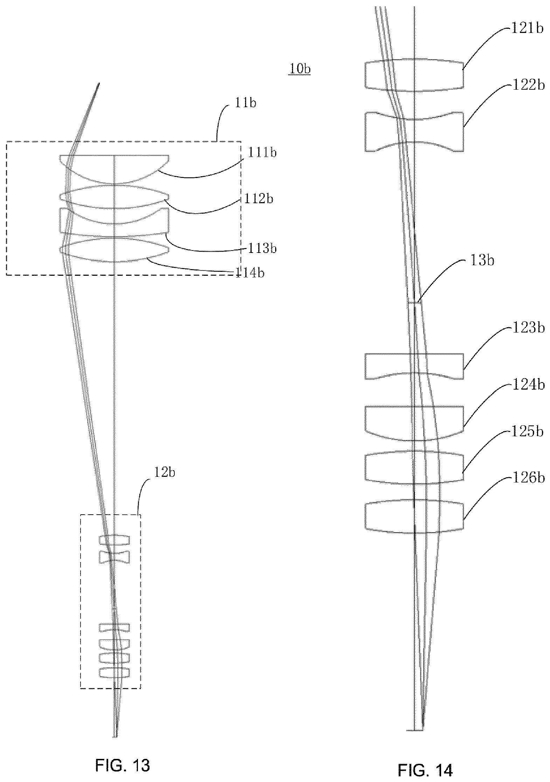

Reference is made to FIG. 13 which shows an optional lens assembly 10b according to the present application, which has a similar structure to the lens assembly 10, except for the front lens group 11b, the rear lens group 12b, structural parameters of the lens assembly 10b, the effective clear aperture, optical parameters, and the corresponding relationship between the working distance and the view field.

The following description focuses on the differences between the lens assembly 10b and the lens assembly 10. In the present embodiment, the lens assembly 10b includes a front lens group 11b, a rear lens group 12b and an aperture diaphragm 13b.

In the present embodiment, the front lens group 11b includes a first lens element 111b, a second lens element 112b, a third lens element 113b, and a fourth lens element 114b arranged from the object side of the lens assembly 10b to the image side of the lens assembly 10b. The first lens element 111b has positive optical power, and an image side surface of the first lens element 111b is a convex surface. The second lens element 112b has positive optical power and is a biconvex lens (corresponding to the third attribute). The third lens element 113b has negative optical power (corresponding to the first attribute), and the third lens element 113b has an image-side convex surface. The fourth lens element 114b has positive optical power and an object side surface is a convex surface (corresponding to the second attribute).

Referring to FIG. 14, the rear lens group 12b includes a fifth lens element 121b, a sixth lens element 122b, a seventh lens element 123b, an eighth lens element 124b, a ninth lens element 125b and a tenth lens element 126b arranged from the object side of the lens assembly 10b to the image side of the lens assembly 10b. Specifically, the fifth lens element 121b is a biconvex lens and has positive optical power. The sixth lens element 122b is a biconcave lens and has negative optical power. An image side surface of the seventh lens element 123b is a concave surface and the seventh lens element 123b has negative optical power. An image side surface of the eighth lens element 124b is a convex surface and the eighth lens element has positive optical power. The ninth lens element 125b is a biconvex lens and has positive optical power. The tenth lens element 126b is a biconvex lens and has positive optical power.

In the present embodiment, the aperture diaphragm 13b is provided between the sixth lens element 122b and the seventh lens element 123b.

In the present embodiment, structural parameters of each element in the lens assembly 10b are shown in the following Table.

**Table 9**

| SURF | RADIUS | THICKNESS | MEDIUM | INDEX | V-NUMBER |
|---|---|---|---|---|---|
| 0 | INFINITE | 62.5 | Air | | |
| 1 | INFINITE | 19.08162 | Glass | 1.497 | 81.59 |
| 2 | -52.197 | 1 | Air | | |
| 3 | 110.00000 | 15.66015 | Glass | 1.497 | 81.59 |
| 4 | -110.00000 | 10.2556 | Air | | |
| 5 | -54.727 | 8.59083 | Glass | 1.90366 | 31.32 |
| 6 | -234.04 | 1 | Air | | |
| 7 | 110.00000 | 15.66015 | Glass | 1.497 | 81.59 |
| 8 | -110.00000 | 183.12899 | Air | | |
| 9 | 64.46800 | 6.51263 | Glass | 1.92287 | 20.88 |
| 10 | -64.46800 | 5.68845 | Air | | |
| 11 | -22.844 | 4.54428 | Glass | 1.80401 | 46.57 |
| 12 | 18.039 | 32.51953 | Air | | |
| 13 | INFINITE | 10.34198 | Air | | |
| 14 | INFINITE | 3.8048 | Glass | 1.92287 | 20.88 |
| 15 | 28.368 | 6.7419 | Air | | |
| 16 | INFINITE | 6.94207 | Glass | 1.497 | 81.59 |
| 17 | -25.83 | 2.05151 | Air | | |
| 18 | 57.40500 | 6.67032 | Glass | 1.497 | 81.59 |
| 19 | -57.40500 | 3.17662 | Air | | |
| 20 | 57.40500 | 6.67032 | Glass | 1.497 | 81.59 |
| 21 | -57.40500 | 39.90901 | Air | | |
| IMG | INFINITE | | | | |

In the Table, SURF denotes the object, or the object side surface of each lens element, or the image side surface of each lens element, or the aperture diaphragm, or an imaging plane. Specifically, SURF is 0 for the object, SURF numbered 1 to 12 sequentially corresponds to the object side surfaces and the image side surfaces of the first lens element 111b to the sixth lens element 122b, SURF numbered 13 corresponds to the aperture diaphragm, SURF numbered 14 to 21 sequentially corresponds to the object side surfaces and the image side surfaces of the seventh lens element 123b to the tenth lens element 126b, and SURF is IMG for the imaging plane. RADIUS corresponds to a radius of curvature in mm. RADIUS which is INFINITE indicates that the radius of curvature is infinite. RADIUS which is positive indicates that a circle center is located on the image side of the lens assembly 10b; RADIUS which is negative indicates that the circle center is located on the object side of the lens assembly 10b. THICKNESS corresponds to a distance between current SURF and next adjacent SURF in SURF numbered 0-21 in mm. MEDIUM corresponds to a medium between current SURF and next adjacent SURF in SURF numbered 0-21. INDEX corresponds to a refractive index. V-NUMBER corresponds to a dispersion coefficient (Abbe number).

In the present embodiment, the effective clear apertures of the object side surface and the image side surface of each lens element and the effective clear aperture (semi-apertures) of the aperture diaphragm in the lens assembly 10b can be shown in the following Table.

**Table 10**

| SURF | X OR R-APER. |
|---|---|
| 1 | 30.6634 |
| 2 | 32.6578 |
| 3 | 33.0151 |
| 4 | 32.5042 |
| 5 | 30.6937 |
| 6 | 33.3927 |
| 7 | 35.2213 |
| 8 | 35.2776 |
| 9 | 6.3043 |
| 10 | 5.5488 |
| 11 | 3.6122 |
| 12 | 3.0756 |
| 13 | 1.4199 |
| 14 | 2.4656 |
| 15 | 2.6715 |
| 16 | 3.9473 |
| 17 | 4.7758 |
| 18 | 5.0414 |
| 19 | 5.2616 |
| 20 | 5.2887 |
| 21 | 5.1292 |
| 22 | 1.7247 |

In the Table, SURF denotes the object side surface of each lens element, or the image side surface of each lens element, or the aperture diaphragm, or the image plane. Specifically, SURF numbered 1-12 and 14-21 corresponds to the object side surfaces and the image side surfaces of the first lens element 111b to the tenth lens element 126b in sequence. SURF numbered 13 corresponds to the aperture diaphragm 13b, and SURF numbered 22 corresponds to IMG in Table 6, i.e., the image plane. (X OR R-APER) corresponds to the effective clear aperture (here, semi-aperture) in mm.

In the present embodiment, the optical parameters of the lens assembly 10b can be shown in the following Table.

**Table 11**

| | | | |
|---|---|---|---|
| OPTICAL POWER | -0.22813 | EFFECTIVE FOCAL LENGTH | -4.38346mm |
| FRONT FOCAL LENGTH | 4.38346mm | REAR FOCAL LENGTH | -4.38346mm |
| FRONT FOCAL POINT | -74.794063mm | REAR FOCAL POINT | 41.468793mm |
| FRONT PRINCIPAL POINT | -79.177524mm | REAR PRINCIPAL POINT | 45.852253mm |
| PRINCIPAL POINT SEP. | 475.071527mm | | |
| FRONT NODAL POINT | -79.177524mm | REAR NODAL POINT | 45.852253mm |
| ENTRANCE PUPIL POINT | -75.023561mm | EXIT PUPIL POINT | 125.193824mm |
| ENT PUP SEMI-AP. | -0.275518mm | EXT PUP SEMI-AP. | -5.262459mm |
| OBJECT POINT | -62.5mm | IMAGE POINT | 39.905865mm |
| OBJECT SEMI-AP. | -5mm | GAUSS. IM. HT. | 1.782755mm |
| OBJECT MAGN. | -0.356551 | PUPIL MAGN. | 19.100214 |
| OVERALL LENGTH | 350.041751mm | | |

In the Table, FRONT FOCAL POINT represents a distance between the front focal point and an intersection point of the optical axis of the lens assembly and the surface with SURF numbered 1; PRINCIPAL POINT SEP. represents a distance between the object-side principal point and an image-side principal point; ENTRANCE PUPIL POINT represents a distance between the entrance pupil point and the intersection point of the optical axis of the lens assembly and the surface with SURF numbered 1; OBJECT POINT represents a distance between the object point and the intersection point of the optical axis of the lens assembly and the surface with SURF numbered 1; OBJECT SEMI-AP. represents a semi-aperture of the view field; OVERALL LENGTH represents a distance between the intersection point of the optical axis of the lens assembly and the surface with SURF numbered 1 and an intersection point of the optical axis of the lens assembly and the surface with SURF numbered 21; REAR FOCAL POINT represents a distance between the rear focal point and the intersection point of the optical axis of the lens assembly and the surface with SURF numbered 21; EXIT PUPIL POINT represents a distance between the optical axis of the lens assembly and the surface with SURF numbered 21; IMAGE POINT represents a distance between the image point and the intersection point of the optical axis of the lens assembly and the surface with SURF numbered 21; GAUSS. IM. HT. corresponds to half of the full field image height. In addition, in the Table, the distance from the object side to the image side of the lens assembly 10b is positive, and the distance from the image side to the object side of the lens assembly 10b is negative.

In the present embodiment, the working distance and imaging view field of the lens assembly 10b can be shown in the following Table.

**Table 12**

| Group | Working distance (mm) | View field (mm) |
|---|---|---|
| 1 | 62.5 | 10 |
| 2 | 55 | 16 |
| 3 | 47.5 | 22 |
| 4 | 40 | 28 |

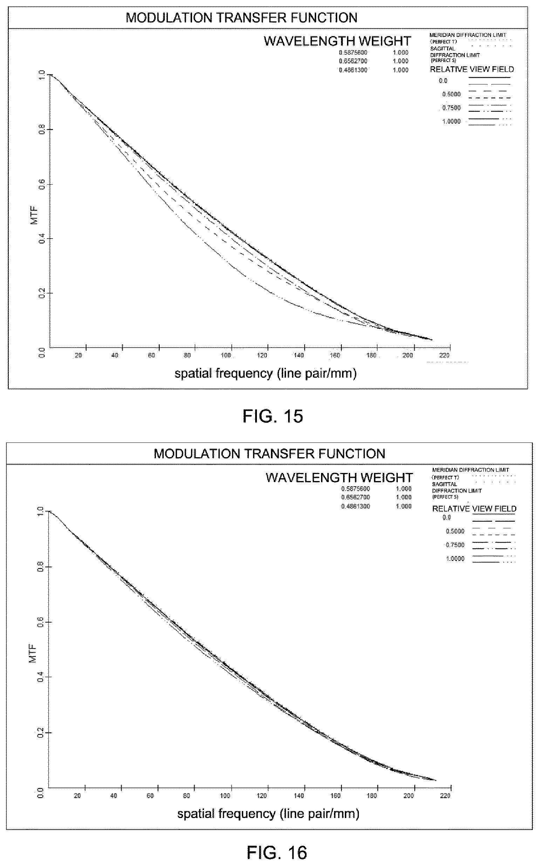

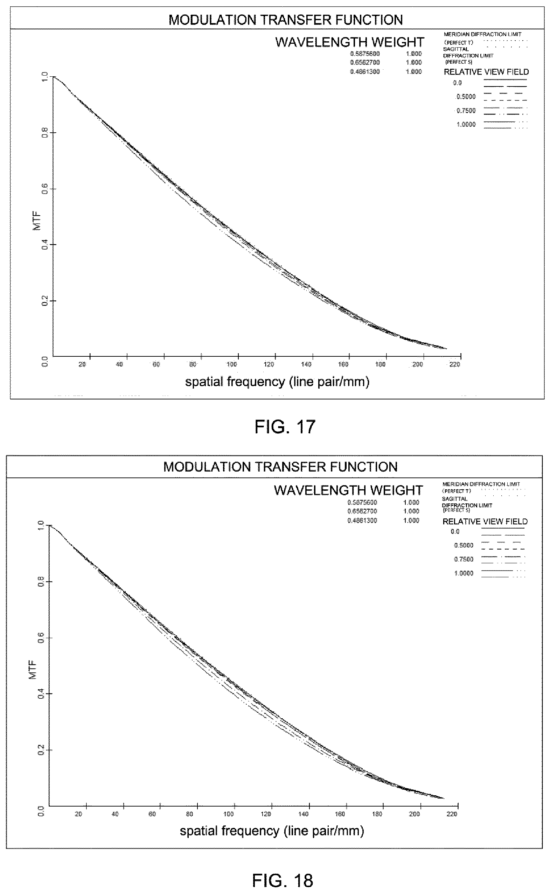

The working distance is a distance between an intersection point of the optical axis of the lens assembly 10b and the object side surface of the first lens element 111b and the object. FIGS. 15 to 18 show graphs of an MTF versus a spatial frequency of the lens assembly 10b at the working distances and the view fields corresponding to groups 1 to 4 in Table 12.

In addition, in the present embodiment, the spread angle of lateral surface imaging is 21.7°.

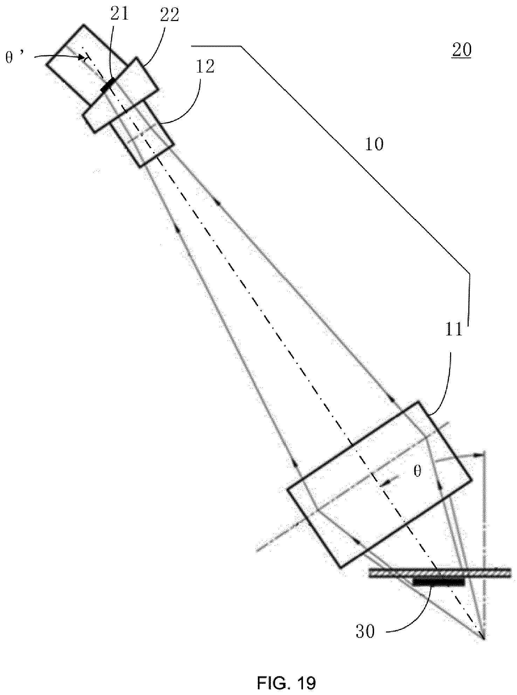

Based on the same inventive concept, referring to FIG. 19, an embodiment of the present application further provides an imaging device 20, including the above-mentioned lens assembly 10 and a photosensitive element 21 provided on the image side of the lens assembly 10, the photosensitive element 21 being configured to catch light projected onto a surface of the photosensitive element 21.

In the present embodiment, the imaging device 20 further includes an adjusting mechanism 22. The adjusting mechanism 22 is located between the photosensitive element 21 and the lens assembly 10, and configured to adjust an included angle between a photosensitive surface of the photosensitive element 21 and an optical axis of the lens assembly 10. The adjusting mechanism 22 may also be a rotating mechanical structure commonly used in the art, as long as the included angle between the photosensitive surface of the photosensitive element and the optical axis of the lens assembly 10 can be adjusted.

In the present embodiment, θ denotes a tilt angle of the optical axis of the lens assembly 10 relative to a normal of a measured piece 30, i.e., an object-plane tilt angle; θ' denotes a tilt angle of the optical axis of the lens assembly 10 relative to a normal of the photosensitive surface of the photosensitive element 21, i.e., an image-plane tilt angle, and the object-plane tilt angle θ and the image-plane tilt angle θ' satisfy the following relationship:$tan \left(θ′\right) = Mtan \left(θ\right)$ where M is the magnification of the lens assembly 10, specifically, the lens magnification at an intersection point of the optical axis and an object plane.

It may be understood that, due to existence of high order aberrations, when the object-plane tilt angle θ and the magnification of the lens assembly 10 are known and the image-plane tilt angle θ' is solved using the above formula, or when the image-plane tilt angle θ' and the magnification of the lens assembly 10 are known and the object-plane tilt angle θ is solved using the above formula, a solution result has a deviation within 2° or within 1°.

The included angle between the photosensitive surface of the photosensitive element 21 and the optical axis of the lens assembly 10 is adjusted by the adjusting mechanism 22, such that a better imaging effect is achieved when a surface which is not perpendicular to the optical axis of the lens assembly 10 or a side circumference which is not parallel to the optical axis is imaged. Further, an unexpected better imaging effect is achieved for the lens assembly 10 for which the entrance pupil point and the front focal point coincide (or have a distance less than 1mm).

Based on the same inventive concept, an embodiment of the present application further provides a detection device, including the above-mentioned imaging device and a processor in signal connection with the imaging device, wherein the processor is configured to perform analysis processing based on an image which is acquired by the imaging device and contains a shot piece image.

Based on the same inventive concept, an embodiment of the present application further provides a detection system, including: a feeding mechanism, a logistics mechanism, a sorting mechanism and the above-mentioned detection device; wherein the feeding mechanism is configured to convey a to-be-detected piece to the logistics mechanism; the logistics mechanism is configured to drive the detected piece to move; the imaging device is provided opposite to a Table top of the logistics mechanism and configured to acquire an image containing the detected piece image when the logistics mechanism drives the detected piece to pass through a view field of the imaging device, and the processor is configured to generate a sorting instruction based on the image; the sorting mechanism is in signal connection with the processor and configured to sort the detected piece based on the sorting instruction. The logistics mechanism can be a conveyor belt, a rotating table, or the like.

Herein, relational terms, such as first, second, or the like, may be used solely to distinguish one entity or operation from another entity or operation without necessarily requiring or implying any actual such relationship or order between such entities or operations.

The above description is only embodiments of the present application and is not intended to limit the protection scope of the present application, and various modifications and changes may be made to the present application by those skilled in the art within the scope of the claims.

## Claims

1. A lens assembly ***(10),*** applicable to a camera lens, the lens assembly comprising:
a plurality of lens elements arranged co-axially, wherein the plurality of lens elements comprise a front lens group ***(11)*** and a rear lens group ***(12)*** which are arranged from the object side of the lens assembly ***(10)*** to an image side of the lens assembly ***(10),*** the front lens group ***(11)*** and the rear lens group ***(12)*** both have positive optical power, and a distance Δ between a rear focal point of the front lens group ***(11)*** and a front focal point of the rear lens group ***(12)*** satisfies 1.5f1<Δ<2.5f1, wherein f1 represents a focal length of the front lens group ***(11),***
wherein an entrance pupil point and a front focal point of the lens assembly ***(10)*** are both located outside the lens assembly ***(10)*** on an object side of the lens assembly ***(10)***; an object-side principal point of the lens assembly ***(10)*** is farther away from the lens assembly ***(10)*** than the front focal point; a spread angle of lateral surface imaging corresponding to the lens assembly ***(10)*** satisfies α=arctan|H/2f|, where α represents the spread angle of lateral surface imaging, 18°≤α≤25°, H represents a full field image height corresponding to the lens assembly ***(10),*** f represents a focal length of the lens assembly ***(10),*** and f<0.

2. The lens assembly ***(10)*** according to claim 1, wherein the focal length of the lens assembly ***(10)*** has a range of -18mm<f<-2mm,
preferably, the focal length of the lens assembly ***(10)*** has a range of -1 Imm<f<-3mm.

3. The lens assembly ***(10)*** according to claim 2, wherein a distance between the entrance pupil point and the front focal point is less than 1mm,
preferably, the distance between the entrance pupil point and the front focal point is less than 0.5mm.

4. The lens assembly ***(10)*** according to claim 3, wherein principal rays have a maximum angular difference of 1° relative to each other at an image plane of the lens assembly ***(10),***
preferably, principal rays have a maximum angular difference of 0.3° relative to each other at an image plane of the lens assembly ***(10).***

5. The lens assembly ***(10)*** according to claim 1, wherein the front lens group ***(11)*** comprises a first lens element ***(111),*** a second lens element ***(112),*** a third lens element ***(113),*** and a fourth lens element ***(114)*** arranged from the object side of the lens assembly ***(10)*** to the image side of the lens assembly ***(10)***; the first lens element ***(111)*** has positive optical power, an image side surface of the first lens element ***(111)*** is a convex surface, one of the second lens element ***(112),*** the third lens element ***(113),*** and the fourth lens element ***(114)*** has a first attribute, the other two thereof have a second attribute and a third attribute respectively, the first attribute comprises negative optical power, the second attribute comprises positive optical power and a convex surface as an object side surface, and the third attribute comprises positive optical power and a biconvex lens.

6. The lens assembly ***(10)*** according to claim 5, wherein an Abbe number of the first lens element ***(111)*** is greater than 70, each of the second attribute and the third attribute further comprises an Abbe number greater than 70, and the first attribute further comprises a refractive index greater than 1.8,
preferably, the rear lens group ***(12)*** comprises a fifth lens element ***(121),*** a sixth lens element ***(122),*** a seventh lens element ***(123),*** an eighth lens element ***(124),*** a ninth lens element ***(125),*** and a tenth lens element ***(126)*** arranged from the object side of the lens assembly ***(10)*** to the image side of the lens assembly ***(10),*** wherein
the fifth lens element ***(121)*** is a biconcave lens and has negative optical power, the sixth lens element ***(122)*** is a biconvex lens and has positive optical power, the seventh lens element ***(123)*** is a biconcave lens and has negative optical power, an image side surface of the eighth lens element ***(124)*** is a convex surface, the eighth lens element ***(124)*** has positive optical power, the ninth lens element ***(125)*** is a biconvex lens and has positive optical power, an image side surface of the tenth lens element ***(126)*** is a convex surface, and the tenth lens element ***(126)*** has negative optical power;
or, the fifth lens element ***(121)*** is a biconcave lens and has negative optical power, an image side surface of the sixth lens element ***(122)*** is a convex surface, the sixth lens element ***(122)*** has positive optical power, the seventh lens element ***(123)*** is a meniscus lens and has positive optical power, the eighth lens element ***(124)*** is a biconcave lens and has negative optical power, the ninth lens element ***(125)*** is a biconvex lens and has positive optical power, and the tenth lens element ***(126)*** is a biconvex lens and has positive optical power;
or, the fifth lens element ***(121)*** is a biconvex lens and has positive optical power, the sixth lens element ***(122)*** is a biconcave lens and has negative optical power, an image side surface of the seventh lens element ***(123)*** is a concave surface, the seventh lens element ***(123)*** has negative optical power, the image side surface of the eighth lens element ***(124)*** is a convex surface, the eighth lens element ***(124)*** has positive optical power, the ninth lens element ***(125)*** is a biconvex lens and has positive optical power, and the tenth lens element ***(126)*** is a biconvex lens and has positive optical power.

7. The lens assembly ***(10)*** according to any one of claims 1 to 3, wherein the plurality of lens elements comprise a first lens element ***(111),*** a second lens element ***(112),*** a third lens element ***(113)*,** and a fourth lens element (114) arranged from the object side of the lens assembly *(10)* to an image side of the lens assembly ***(10)***; the first lens element (111) has positive optical power, an image side surface of the first lens element (111) is a convex surface, one of the second lens element (112), the third lens element (113), and the fourth lens element (114) has a first attribute, the other two thereof have a second attribute and a third attribute respectively, the first attribute comprises negative optical power, the second attribute comprises positive optical power and a convex surface as an object side surface, and the third attribute comprises positive optical power and a biconvex lens.

8. The lens assembly (10) according to claim 7, wherein an Abbe number of the first lens element (111) is greater than 70, each of the second attribute and the third attribute further comprises an Abbe number greater than 70, and the first attribute further comprises a refractive index greater than 1.8.

9. The lens assembly (10) according to claim 8, wherein the plurality of lens elements further comprise a fifth lens element (121), a sixth lens element (122), a seventh lens element (123), an eighth lens element (124), a ninth lens element (125), and a tenth lens element (126) arranged from the object side of the lens assembly (10) to the image side of the lens assembly *(10),* and the first lens element (111) to the tenth lens element (126) are sequentially arranged from the object side of the lens assembly *(10)* to the image side of the lens assembly *(10),* wherein
the fifth lens element (121) is a biconcave lens and has negative optical power, the sixth lens element (122) is a biconvex lens and has positive optical power, the seventh lens element *(123)* is a biconcave lens and has negative optical power, an image side surface of the eighth lens element (124) is a convex surface, the eighth lens element (124) has positive optical power, the ninth lens element ***(125)*** is a biconvex lens and has positive optical power, an image side surface of the tenth lens element (126) is a convex surface, and the tenth lens element (126) has negative optical power;
or, the fifth lens element (121) is a biconcave lens and has negative optical power, an image side surface of the sixth lens element (122) is a convex surface, the sixth lens element (122) has positive optical power, the seventh lens element (123) is a meniscus lens and has positive optical power, the eighth lens element (124) is a biconcave lens and has negative optical power, the ninth lens element (125) is a biconvex lens and has positive optical power, and the tenth lens element (126) is a biconvex lens and has positive optical power;
or, the fifth lens element (121) is a biconvex lens and has positive optical power, the sixth lens element (122) is a biconcave lens and has negative optical power, an image side surface of the seventh lens element (123) is a concave surface, the seventh lens element (123) has negative optical power, the image side surface of the eighth lens element (124) is a convex surface, the eighth lens element (124) has positive optical power, the ninth lens element ***(125)*** is a biconvex lens and has positive optical power, and the tenth lens element (126) is a biconvex lens and has positive optical power.

10. The lens assembly ***(10)*** according to claim 1, wherein the lens elements are of a spherical lens.

11. An imaging device ***(20),* characterized by** comprising the lens assembly ***(10)*** according to any one of claims 1 to 10 and a photosensitive element ***(21)*** provided on an image side of the lens assembly ***(10),*** the photosensitive element ***(21)*** being configured to catch light projected onto a surface of the photosensitive element ***(21).***

12. The imaging device ***(20)*** according to claim 11, wherein the imaging device ***(20)*** further comprises an adjusting mechanism ***(22),*** the adjusting mechanism ***(22)*** being located between the photosensitive element ***(21)*** and the lens assembly ***(10),*** and configured to adjust an included angle between a photosensitive surface of the photosensitive element ***(21)*** and an optical axis of the lens assembly ***(10).***

13. A detection device, **characterized by** comprising the imaging device ***(20)*** according to any one of claims 11 to 12 and a processor in signal connection with the imaging device ***(20),*** wherein the processor is configured to perform analysis processing based on an image which is acquired by the imaging device ***(20)*** and contains a shot piece image.

14. A detection system, **characterized by** comprising: a feeding mechanism, a logistics mechanism, a sorting mechanism and the detection device according to claim 13, wherein the feeding mechanism is configured to convey a to-be-detected piece to the logistics mechanism; the logistics mechanism is configured to drive the detected piece to move; the imaging device ***(20)*** is provided opposite to a table top of the logistics mechanism and configured to acquire an image containing a detected piece image when the logistics mechanism drives the detected piece to pass through a view field of the imaging device ***(20),*** and the processor is configured to generate a sorting instruction based on the image; and the sorting mechanism is in signal connection with the processor and configured to sort the detected piece based on the sorting instruction.

## Patentansprüche

1. Eine Linsenanordnung ***(10),*** anwendbar auf ein Kameraobjektiv, wobei die Linsenanordnung umfasst:
mehrere Linsenelemente, die koaxial angeordnet sind, wobei die mehreren Linsenelemente eine vordere Linsengruppe ***(11)*** und eine hintere Linsengruppe ***(12)*** umfassen, die von der Objektseite der Linsenanordnung ***(10)*** zu einer Bildseite der Linsenanordnung ***(10)*** angeordnet sind, wobei die vordere Linsengruppe ***(11)*** und die hintere Linsengruppe ***(12)*** beide positive Brechkraft aufweisen, und ein Abstand Δ zwischen einem hinteren Brennpunkt der vorderen Linsengruppe ***(11)*** und einem vorderen Brennpunkt der hinteren Linsengruppe ***(12)*** 1,5f1<Δ<2,5f1 erfüllt, wobei f1 eine Brennweite der vorderen Linsengruppe ***(11)*** darstellt,
wobei ein Eintrittspupillenpunkt und ein vorderer Brennpunkt der Linsenanordnung ***(10)*** beide außerhalb der Linsenanordnung ***(10)*** auf einer Objektseite der Linsenanordnung ***(10)*** angeordnet sind, ein objektseitiger Hauptpunkt der Linsenanordnung ***(10)*** weiter von der Linsenanordnung ***(10)*** entfernt ist als der vordere Brennpunkt; ein Spreizwinkel einer Lateralseitenabbildung, der der Linsenanordnung ***(10)*** entspricht, α=arctan|H/2f| erfüllt, wobei α den Spreizwinkel der Lateralseitenabbildung darstellt, 18°≤α≤25°, H eine Vollfeldbildhöhe darstellt, die der Linsenanordnung ***(10)*** entspricht, f eine Brennweite der Linsenanordnung ***(10)*** darstellt, und f<0.

2. Linsenanordnung ***(10)*** nach Anspruch 1, wobei die Brennweite der Linsenanordnung ***(10)*** einen Bereich von -18mm<f<-2mm aufweist,
vorzugsweise weist die Brennweite der Linsenanordnung ***(10)*** einen Bereich von -11mm<f<-3mm auf.

3. Linsenanordnung ***(10)*** nach Anspruch 2, wobei ein Abstand zwischen dem Eintrittspupillenpunkt und dem vorderen Brennpunkt kleiner als 1mm ist,
vorzugsweise ist der Abstand zwischen dem Eintrittspupillenpunkt und dem vorderen Brennpunkt kleiner als 0,5mm.

4. Linsenanordnung ***(10)*** nach Anspruch 3, wobei Hauptstrahlen eine maximale Winkeldifferenz von 1° relativ zueinander an einer Bildebene der Linsenanordnung ***(10)*** aufweisen, vorzugsweise weisen Hauptstrahlen eine maximale Winkeldifferenz von 0,3° relativ zueinander an einer Bildebene der Linsenanordnung ***(10)*** auf.

5. Linsenanordnung ***(10)*** nach Anspruch 1, wobei die vordere Linsengruppe ***(11)*** ein erstes Linsenelement ***(111),*** ein zweites Linsenelement ***(112),*** ein drittes Linsenelement ***(113)*** und ein viertes Linsenelement ***(114)*** umfasst, die von der Objektseite der Linsenanordnung ***(10)*** zu der Bildseite der Linsenanordnung ***(10)*** angeordnet sind, wobei das erste Linsenelement ***(111)*** positive Brechkraft aufweist, eine bildseitige Oberfläche des ersten Linsenelements ***(111)*** eine konvexe Oberfläche ist, eines von dem zweiten Linsenelement ***(112),*** dem dritten Linsenelement ***(113)*** und dem vierten Linsenelement ***(114)*** ein erstes Attribut aufweist, die anderen zwei davon jeweils ein zweites Attribut und ein drittes Attribut aufweisen, wobei das erste Attribut negative Brechkraft umfasst, das zweite Attribut positive Brechkraft und eine konvexe Oberfläche als objektseitige Oberfläche umfasst, und das dritte Attribut positive Brechkraft und eine bikonvexe Linse umfasst.

6. Linsenanordnung ***(10)*** nach Anspruch 5, wobei eine Abbe-Zahl des ersten Linsenelements ***(111)*** größer als 70 ist, jedes von dem zweiten Attribut und dem dritten Attribut ferner eine Abbe-Zahl größer als 70 umfasst, und das erste Attribut ferner einen Brechungsindex größer als 1,8 umfasst,
vorzugsweise umfasst die hintere Linsengruppe ***(12)*** ein fünftes Linsenelement ***(121),*** ein sechstes Linsenelement ***(122),*** ein siebtes Linsenelement ***(123),*** ein achtes Linsenelement ***(124),*** ein neuntes Linsenelement ***(125)*** und ein zehntes Linsenelement ***(126),*** die von der Objektseite der Linsenanordnung ***(10)*** zu der Bildseite der Linsenanordnung ***(10)*** angeordnet sind, wobei
das fünfte Linsenelement ***(121)*** eine bikonkave Linse ist und negative Brechkraft aufweist, das sechste Linsenelement ***(122)*** eine bikonvexe Linse ist und positive Brechkraft aufweist, das siebte Linsenelement ***(123)*** eine bikonkave Linse ist und negative Brechkraft aufweist, eine bildseitige Oberfläche des achten Linsenelements ***(124)*** eine konvexe Oberfläche ist, das achte Linsenelement ***(124)*** positive Brechkraft aufweist, das neunte Linsenelement ***(125)*** eine bikonvexe Linse ist und positive Brechkraft aufweist, eine bildseitige Oberfläche des zehnten Linsenelements ***(126)*** eine konvexe Oberfläche ist, und das zehnte Linsenelement ***(126)*** negative Brechkraft aufweist;
oder das fünfte Linsenelement ***(121)*** eine bikonkave Linse ist und negative Brechkraft aufweist, eine bildseitige Oberfläche des sechsten Linsenelements ***(122)*** eine konvexe Oberfläche ist, das sechste Linsenelement ***(122)*** positive Brechkraft aufweist, das siebte Linsenelement ***(123)*** eine Meniskuslinse ist und positive Brechkraft aufweist, das achte Linsenelement ***(124)*** eine bikonkave Linse ist und negative Brechkraft aufweist, das neunte Linsenelement ***(125)*** eine bikonvexe Linse ist und positive Brechkraft aufweist, und das zehnte Linsenelement ***(126)*** eine bikonvexe Linse ist und positive Brechkraft aufweist;
oder das fünfte Linsenelement ***(121)*** eine bikonvexe Linse ist und positive Brechkraft aufweist, das sechste Linsenelement (122) eine bikonkave Linse ist und negative Brechkraft aufweist, eine bildseitige Oberfläche des siebten Linsenelements ***(123)*** eine konkave Oberfläche ist, das siebte Linsenelement ***(123)*** negative Brechkraft aufweist, die bildseitige Oberfläche des achten Linsenelements ***(124)*** eine konvexe Oberfläche ist, das achte Linsenelement ***(124)*** positive Brechkraft aufweist, das neunte Linsenelement ***(125)*** eine bikonvexe Linse ist und positive Brechkraft aufweist, und das zehnte Linsenelement ***(126)*** eine bikonvexe Linse ist und positive Brechkraft aufweist.

7. Linsenanordnung ***(10)*** nach einem der Ansprüche 1 bis 3, wobei die mehreren Linsenelemente ein erstes Linsenelement ***(111),*** ein zweites Linsenelement ***(112),*** ein drittes Linsenelement ***(113)*** und ein viertes Linsenelement ***(114)*** umfassen, die von der Objektseite der Linsenanordnung ***(10)*** zu einer Bildseite der Linsenanordnung ***(10)*** angeordnet sind, wobei das erste Linsenelement ***(111)*** positive Brechkraft aufweist, eine bildseitige Oberfläche des ersten Linsenelements ***(111)*** eine konvexe Oberfläche ist, eines von dem zweiten Linsenelement ***(112),*** dem dritten Linsenelement ***(113)*** und dem vierten Linsenelement ***(114)*** ein erstes Attribut aufweist, die anderen zwei davon jeweils ein zweites Attribut und ein drittes Attribut aufweisen, wobei das erste Attribut negative Brechkraft umfasst, das zweite Attribut positive Brechkraft und eine konvexe Oberfläche als objektseitige Oberfläche umfasst, und das dritte Attribut positive Brechkraft und eine bikonvexe Linse umfasst.

8. Linsenanordnung ***(10)*** nach Anspruch 7, wobei eine Abbe-Zahl des ersten Linsenelements ***(111)*** größer als 70 ist, jedes von dem zweiten Attribut und dem dritten Attribut ferner eine Abbe-Zahl größer als 70 umfasst, und das erste Attribut ferner einen Brechungsindex größer als 1,8 umfasst.

9. Linsenanordnung ***(10)*** nach Anspruch 8, wobei die mehreren Linsenelemente ferner ein fünftes Linsenelement ***(121),*** ein sechstes Linsenelement ***(122),*** ein siebtes Linsenelement ***(123),*** ein achtes Linsenelement ***(124),*** ein neuntes Linsenelement ***(125)*** und ein zehntes Linsenelement ***(126)*** umfassen, die von der Objektseite der Linsenanordnung ***(10)*** zu der Bildseite der Linsenanordnung ***(10)*** angeordnet sind, und das erste Linsenelement ***(111)*** bis zu dem zehnten Linsenelement ***(126)*** sequenziell von der Objektseite der Linsenanordnung ***(10)*** zu der Bildseite der Linsenanordnung ***(10)*** angeordnet sind, wobei
das fünfte Linsenelement ***(121)*** eine bikonkave Linse ist und negative Brechkraft aufweist, das sechste Linsenelement ***(122)*** eine bikonvexe Linse ist und positive Brechkraft aufweist, das siebte Linsenelement ***(123)*** eine bikonkave Linse ist und negative Brechkraft aufweist, eine bildseitige Oberfläche des achten Linsenelements ***(124)*** eine konvexe Oberfläche ist, das achte Linsenelement ***(124)*** positive Brechkraft aufweist, das neunte Linsenelement ***(125)*** eine bikonvexe Linse ist und positive Brechkraft aufweist, eine bildseitige Oberfläche des zehnten Linsenelements **(126)** eine konvexe Oberfläche ist, und das zehnte Linsenelement **(126)** negative Brechkraft aufweist;
oder das fünfte Linsenelement **(121)** eine bikonkave Linse ist und negative Brechkraft aufweist, eine bildseitige Oberfläche des sechsten Linsenelements **(122)** eine konvexe Oberfläche ist, das sechste Linsenelement **(122)** positive Brechkraft aufweist, das siebte Linsenelement **(123)** eine Meniskuslinse ist und positive Brechkraft aufweist, das achte Linsenelement ***(124)*** eine bikonkave Linse ist und negative Brechkraft aufweist, das neunte Linsenelement ***(125)*** eine bikonvexe Linse ist und positive Brechkraft aufweist, und das zehnte Linsenelement ***(126)*** eine bikonvexe Linse ist und positive Brechkraft aufweist;
oder das fünfte Linsenelement ***(121)*** eine bikonvexe Linse ist und positive Brechkraft aufweist, das sechste Linsenelement ***(122)*** eine bikonkave Linse ist und negative Brechkraft aufweist, eine bildseitige Oberfläche des siebten Linsenelements ***(123)*** eine konkave Oberfläche ist, das siebte Linsenelement ***(123)*** negative Brechkraft aufweist, die bildseitige Oberfläche des achten Linsenelements ***(124)*** eine konvexe Oberfläche ist, das achte Linsenelement ***(124)*** positive Brechkraft aufweist, das neunte Linsenelement ***(125)*** eine bikonvexe Linse ist und positive Brechkraft aufweist, und das zehnte Linsenelement ***(126)*** eine bikonvexe Linse ist und positive Brechkraft aufweist.

10. Linsenanordnung ***(10)*** nach Anspruch 1, wobei die Linsenelemente sphärische Linsen sind.

11. Bildgebungsvorrichtung ***(20)***, **dadurch gekennzeichnet, dass** sie die Linsenanordnung ***(10)*** nach einem der Ansprüche 1 bis 10 und ein lichtempfindliches Element ***(21),*** das auf einer Bildseite der Linsenanordnung ***(10)*** vorgesehen ist, umfasst, wobei das lichtempfindliche Element ***(21)*** konfiguriert ist, Licht aufzufangen, das auf eine Oberfläche des lichtempfindlichen Elements ***(21)*** projiziert wird.

12. Bildgebungsvorrichtung ***(20)*** nach Anspruch 11, wobei die Bildgebungsvorrichtung ***(20)*** ferner einen Einstellmechanismus ***(22)*** umfasst, wobei der Einstellmechanismus ***(22)*** zwischen dem lichtempfindlichen Element ***(21)*** und der Linsenanordnung ***(10)*** angeordnet ist und konfiguriert ist, einen eingeschlossenen Winkel zwischen einer lichtempfindlichen Oberfläche des lichtempfindlichen Elements ***(21)*** und einer optischen Achse der Linsenanordnung ***(10)*** einzustellen.

13. Detektionsvorrichtung, **dadurch gekennzeichnet, dass** sie die Bildgebungsvorrichtung ***(20)*** nach einem der Ansprüche 11 bis 12 und einen Prozessor in Signalverbindung mit der Bildgebungsvorrichtung ***(20)*** umfasst, wobei der Prozessor konfiguriert ist, Analyseverarbeitung basierend auf einem Bild durchzuführen, das durch die Bildgebungsvorrichtung ***(20)*** erfasst wird und ein aufgenommenes Stückbild enthält.

14. Detektionssystem, **dadurch gekennzeichnet, dass** es umfasst: einen Zuführmechanismus, einen Logistikmechanismus, einen Sortiermechanismus und die Detektionsvorrichtung nach Anspruch 13, wobei der Zuführmechanismus konfiguriert ist, ein zu detektierendes Stück zu dem Logistikmechanismus zu befördern; der Logistikmechanismus konfiguriert ist, das detektierte Stück anzutreiben, sich zu bewegen; die Bildgebungsvorrichtung ***(20)*** gegenüber einer Tischplatte des Logistikmechanismus vorgesehen ist und konfiguriert ist, ein Bild zu erfassen, das ein detektiertes Stückbild enthält, wenn der Logistikmechanismus das detektierte Stück antreibt, durch ein Sichtfeld der Bildgebungsvorrichtung ***(20)*** zu passieren, und der Prozessor konfiguriert ist, eine Sortieranweisung basierend auf dem Bild zu erzeugen; und der Sortiermechanismus in Signalverbindung mit dem Prozessor steht und konfiguriert ist, das detektierte Stück basierend auf der Sortieranweisung zu sortieren.

## Revendications

1. Ensemble lentille ***(10),*** pour son application dans un objectif de caméra, l'ensemble lentille comprenant :
une pluralité d'éléments de lentille disposés de façon coaxiale, dans lequel la pluralité d'éléments de lentille comprend un groupe de lentilles avant ***(11)*** et un groupe de lentilles arrière ***(12)*** qui sont disposés du côté objet de l'ensemble lentille ***(10)*** à un côté image de l'ensemble lentille ***(10),*** le groupe de lentilles avant ***(11)*** et le groupe de lentilles arrière ***(12)*** présentent tous les deux une puissance optique positive, et une distance Δ entre un point focal arrière du groupe de lentilles avant ***(11)*** et un point focal avant du groupe de lentilles arrière ***(12)*** satisfait 1,5fl<Δ<2,5fl, dans lequel f1 représente une longueur focale du groupe de lentilles avant ***(11),***
dans lequel un point de pupille d'entrée et un point focal avant de l'ensemble lentille ***(10)*** sont tous les deux situés à l'extérieur de l'ensemble lentille ***(10)*** d'un côté objet de l'ensemble lentille ***(10),*** un point principal côté objet de l'ensemble lentille ***(10)*** est plus éloigné de l'ensemble lentille ***(10)*** que le point focal avant ; un angle d'expansion d'imagerie de surface latérale correspondant à l'ensemble lentille ***(10)*** satisfait α=arctan|H/2f|, où α représente l'angle d'expansion d'imagerie de surface latérale, 18°≤α≤25°, H représente une hauteur d'image de champ complet correspondant à l'ensemble lentille ***(10),*** f représente une longueur focale de l'ensemble lentille ***(10),*** et f<0.

2. Ensemble lentille ***(10)*** selon la revendication 1, dans lequel la longueur focale de l'ensemble lentille ***(10)*** présente une plage de -18mm<f<-2mm,
de préférence, la longueur focale de l'ensemble lentille ***(10)*** présente une plage de -11mm<f<-3mm.

3. Ensemble lentille ***(10)*** selon la revendication 2, dans lequel une distance entre le point de pupille d'entrée et le point focal avant est inférieure à 1 mm,
de préférence, la distance entre le point de pupille d'entrée et le point focal avant est inférieure à 0,5 mm.

4. Ensemble lentille ***(10)*** selon la revendication 3, dans lequel les rayons principaux présentent une différence angulaire maximale de 1° les uns par rapport aux autres au niveau d'un plan image de l'ensemble lentille ***(10),*** de préférence, les rayons principaux présentent une différence angulaire maximale de 0,3° les uns par rapport aux autres au niveau d'un plan image de l'ensemble lentille ***(10).***

5. Ensemble lentille ***(10)*** selon la revendication 1, dans lequel le groupe de lentilles avant ***(11)*** comprend un premier élément de lentille ***(111)***, un deuxième élément de lentille ***(112),*** un troisième élément de lentille ***(113)*** et un quatrième élément de lentille ***(114)*** disposés du côté objet de l'ensemble lentille ***(10)*** au côté image de l'ensemble lentille ***(10)*,** le premier élément de lentille ***(111)*** présente une puissance optique positive, une surface côté image du premier élément de lentille ***(111)*** est une surface convexe, l'un parmi le deuxième élément de lentille ***(112),*** le troisième élément de lentille ***(113)*** et le quatrième élément de lentille ***(114)*** présente un premier attribut, les deux autres parmi ceux-ci présentent un deuxième attribut et un troisième attribut, respectivement, le premier attribut comprend une puissance optique négative, le deuxième attribut comprend une puissance optique positive et une surface convexe en tant que surface côté objet, et le troisième attribut comprend une puissance optique positive et une lentille biconvexe.

6. Ensemble lentille ***(10)*** selon la revendication 5, dans lequel un nombre d'Abbe du premier élément de lentille ***(111)*** est supérieur à 70, chacun du deuxième attribut et du troisième attribut comprend en outre un nombre d'Abbe supérieur à 70, et le premier attribut comprend en outre un indice de réfraction supérieur à 1,8,
de préférence, le groupe de lentilles arrière ***(12)*** comprend un cinquième élément de lentille ***(121),*** un sixième élément de lentille ***(122),*** un septième élément de lentille ***(123),*** un huitième élément de lentille ***(124),*** un neuvième élément de lentille ***(125)*** et un dixième élément de lentille ***(126)*** disposés du côté objet de l'ensemble lentille ***(10)*** au côté image de l'ensemble lentille ***(10),*** dans lequel
le cinquième élément de lentille ***(121)*** est une lentille biconcave et présente une puissance optique négative, le sixième élément de lentille ***(122)*** est une lentille biconvexe et présente une puissance optique positive, le septième élément de lentille ***(123)*** est une lentille biconcave et présente une puissance optique négative, une surface côté image du huitième élément de lentille ***(124)*** est une surface convexe, le huitième élément de lentille ***(124)*** présente une puissance optique positive, le neuvième élément de lentille ***(125)*** est une lentille biconvexe et présente une puissance optique positive, une surface côté image du dixième élément de lentille ***(126)*** est une surface convexe, et le dixième élément de lentille ***(126)*** présente une puissance optique négative ;
ou, le cinquième élément de lentille ***(121)*** est une lentille biconcave et présente une puissance optique négative, une surface côté image du sixième élément de lentille ***(122)*** est une surface convexe, le sixième élément de lentille ***(122)*** présente une puissance optique positive, le septième élément de lentille ***(123)*** est une lentille ménisque et présente une puissance optique positive, le huitième élément de lentille ***(124)*** est une lentille biconcave et présente une puissance optique négative, le neuvième élément de lentille ***(125)*** est une lentille biconvexe et présente une puissance optique positive, et le dixième élément de lentille ***(126)*** est une lentille biconvexe et présente une puissance optique positive ;
ou, le cinquième élément de lentille ***(121)*** est une lentille biconvexe et présente une puissance optique positive, le sixième élément de lentille ***(122)*** est une lentille biconcave et présente une puissance optique négative, une surface côté image du septième élément de lentille ***(123)*** est une surface concave, le septième élément de lentille ***(123)*** présente une puissance optique négative, la surface côté image du huitième élément de lentille ***(124)*** est une surface convexe, le huitième élément de lentille ***(124)*** présente une puissance optique positive, le neuvième élément de lentille ***(125)*** est une lentille biconvexe et présente une puissance optique positive, et le dixième élément de lentille ***(126)*** est une lentille biconvexe et présente une puissance optique positive.

7. Ensemble lentille ***(10)*** selon l'une quelconque des revendications 1 à 3, dans lequel la pluralité d'éléments de lentille comprend un premier élément de lentille ***(111),*** un deuxième élément de lentille ***(112),*** un troisième élément de lentille ***(113)*** et un quatrième élément de lentille ***(114)*** disposés du côté objet de l'ensemble lentille ***(10)*** à un côté image de l'ensemble lentille ***(10),*** le premier élément de lentille ***(111)*** présente une puissance optique positive, une surface côté image du premier élément de lentille ***(111)*** est une surface convexe, l'un parmi le deuxième élément de lentille ***(112),*** le troisième élément de lentille ***(113)*** et le quatrième élément de lentille ***(114)*** présente un premier attribut, les deux autres parmi ceux-ci présentent un deuxième attribut et un troisième attribut, respectivement, le premier attribut comprend une puissance optique négative, le deuxième attribut comprend une puissance optique positive et une surface convexe en tant que surface côté objet, et le troisième attribut comprend une puissance optique positive et une lentille biconvexe.

8. Ensemble lentille ***(10)*** selon la revendication 7, dans lequel un nombre d'Abbe du premier élément de lentille ***(111)*** est supérieur à 70, chacun du deuxième attribut et du troisième attribut comprend en outre un nombre d'Abbe supérieur à 70, et le premier attribut comprend en outre un indice de réfraction supérieur à 1,8.

9. Ensemble lentille ***(10)*** selon la revendication 8, dans lequel la pluralité d'éléments de lentille comprend en outre un cinquième élément de lentille ***(121),*** un sixième élément de lentille ***(122),*** un septième élément de lentille ***(123),*** un huitième élément de lentille ***(124),*** un neuvième élément de lentille ***(125)*** et un dixième élément de lentille ***(126)*** disposés du côté objet de l'ensemble lentille ***(10)*** au côté image de l'ensemble lentille ***(10),*** et le premier élément de lentille ***(111)*** au dixième élément de lentille ***(126)*** sont disposés en séquence du côté objet de l'ensemble lentille ***(10)*** au côté image de l'ensemble lentille ***(10),*** dans lequel
le cinquième élément de lentille ***(121)*** est une lentille biconcave et présente une puissance optique négative, le sixième élément de lentille ***(122)*** est une lentille biconvexe et présente une puissance optique positive, le septième élément de lentille ***(123)*** est une lentille biconcave et présente une puissance optique négative, une surface côté image du huitième élément de lentille ***(124)*** est une surface convexe, le huitième élément de lentille ***(124)*** présente une puissance optique positive, le neuvième élément de lentille ***(125)*** est une lentille biconvexe et présente une puissance optique positive, une surface côté image du dixième élément de lentille ***(126)*** est une surface convexe, et le dixième élément de lentille ***(126)*** présente une puissance optique négative ;
ou, le cinquième élément de lentille ***(121)*** est une lentille biconcave et présente une puissance optique négative, une surface côté image du sixième élément de lentille ***(122)*** est une surface convexe, le sixième élément de lentille ***(122)*** présente une puissance optique positive, le septième élément de lentille ***(123)*** est une lentille ménisque et présente une puissance optique positive, le huitième élément de lentille ***(124)*** est une lentille biconcave et présente une puissance optique négative, le neuvième élément de lentille ***(125)*** est une lentille biconvexe et présente une puissance optique positive, et le dixième élément de lentille ***(126)*** est une lentille biconvexe et présente une puissance optique positive ;
ou, le cinquième élément de lentille ***(121)*** est une lentille biconvexe et présente une puissance optique positive, le sixième élément de lentille ***(122)*** est une lentille biconcave et présente une puissance optique négative, une surface côté image du septième élément de lentille ***(123)*** est une surface concave, le septième élément de lentille ***(123)*** présente une puissance optique négative, la surface côté image du huitième élément de lentille ***(124)*** est une surface convexe, le huitième élément de lentille ***(124)*** présente une puissance optique positive, le neuvième élément de lentille ***(125)*** est une lentille biconvexe et présente une puissance optique positive, et le dixième élément de lentille ***(126)*** est une lentille biconvexe et présente une puissance optique positive.

10. Ensemble lentille ***(10)*** selon la revendication 1, dans lequel les éléments de lentille sont des lentilles sphériques.

11. Dispositif d'imagerie ***(20),* caractérisé en ce qu'**il comprend l'ensemble lentille ***(10)*** selon l'une quelconque des revendications 1 à 10 et un élément photosensible ***(21)*** ménagé sur un côté image de l'ensemble lentille ***(10),*** l'élément photosensible ***(21)*** étant configuré pour capturer la lumière projetée sur une surface de l'élément photosensible ***(21).***

12. Dispositif d'imagerie ***(20)*** selon la revendication 11, dans lequel le dispositif d'imagerie ***(20)*** comprend en outre un mécanisme de réglage ***(22),*** le mécanisme de réglage ***(22)*** étant situé entre l'élément photosensible ***(21)*** et l'ensemble lentille ***(10),*** et configuré pour régler un angle inclus entre une surface photosensible de l'élément photosensible ***(21)*** et un axe optique de l'ensemble lentille ***(10).***

13. Dispositif de détection, **caractérisé en ce qu'**il comprend le dispositif d'imagerie ***(20)*** selon l'une quelconque des revendications 11 à 12 et un processeur en connexion de signal avec le dispositif d'imagerie ***(20)***, dans lequel le processeur est configuré pour effectuer un traitement d'analyse sur la base d'une image qui est acquise par le dispositif d'imagerie ***(20)*** et contient une image de pièce prise.

14. Système de détection, **caractérisé en ce qu'**il comprend : un mécanisme d'alimentation, un mécanisme de transfert, un mécanisme de tri et le dispositif de détection selon la revendication 13, dans lequel le mécanisme d'alimentation est configuré pour acheminer une pièce à détecter vers le mécanisme de transfert ; le mécanisme de transfert est configuré pour entraîner la pièce détectée en mouvement ; le dispositif d'imagerie ***(20)*** est ménagé en regard d'un plateau du mécanisme de transfert et configuré pour acquérir une image contenant une image de pièce détectée lorsque le mécanisme de transfert entraîne la pièce détectée à passer à travers un champ de vision du dispositif d'imagerie ***(20),*** et le processeur est configuré pour générer une instruction de tri sur la base de l'image ; et le mécanisme de tri est en connexion de signal avec le processeur et configuré pour trier la pièce détectée sur la base de l'instruction de tri.
